# EUROPEAN PATENT SPECIFICATION

(11) **EP 4 322 045 B1**
(45) Date of publication and mention of the grant of the patent: **19.11.2025**
(21) Application number: 23186808.4
(22) Date of filing: 20.07.2023
(51) Int. Cl.: G06F 30/398, G06F 119/18

(54) **METHOD OF MANUFACTURING SEMICONDUCTOR DEVICE**
VERFAHREN ZUR HERSTELLUNG EINER HALBLEITERANORDNUNG
PROCÉDÉ DE FABRICATION D'UN DISPOSITIF SEMI-CONDUCTEUR

(30) Priority: 09.08.2022 KR 20220099430
(43) Date of publication of application: 14.02.2024
(73) Proprietor: Samsung Electronics Co., Ltd., Suwon-si, Gyeonggi-do 16677 (KR)
(72) Inventor: KIM, Subin, 16677 Suwon-si (KR); JEON, Junsu, 16677 Suwon-si (KR); KANG, Jaehyun, 16677 Suwon-si (KR); KIM, Byungmoo, 16677 Suwon-si (KR); JEON, Joongwon, 16677 Suwon-si (KR)
(74) Representative: Marks & Clerk LLP

(56) References cited:
- MARTIN ANDREAS ET AL: "Reliability characterisation of plasma induced charging damage (PID) for MOS transistors of a silicon on insulator (SOI) process using product relevant test structures and fWLR methods", 2021 IEEE INTERNATIONAL INTEGRATED RELIABILITY WORKSHOP (IIRW), IEEE, 4 October 2021 (2021-10-04), pages 1 - 6, XP034044615, DOI: 10.1109/IIRW53245.2021.9635611
- MARTIN ANDREAS: "Review on the reliability characterization of plasma-induced damage", JOURNAL OF VACUUM SCIENCE AND TECHNOLOGY: PART B, AVS / AIP, MELVILLE, NEW YORK, NY, US, vol. 27, no. 1, 9 February 2009 (2009-02-09), pages 426 - 434, XP012129105, ISSN: 1071-1023, DOI: 10.1116/1.3054356
- SHIROTA H ET AL: "A new router for reducing "antenna effect" in ASIC design", CUSTOM INTEGRATED CIRCUITS CONFERENCE, 1998. PROCEEDINGS OF THE IEEE 1 998 SANTA CLARA, CA, USA 11-14 MAY 1998, NEW YORK, NY, USA,IEEE, US, 11 May 1998 (1998-05-11), pages 601 - 604, XP010294009, ISBN: 978-0-7803-4292-7, DOI: 10.1109/CICC.1998.695049

## Description

### TECHNICAL FIELD

Embodiments of the inventive concept relate to a manufacturing method of a semiconductor device, and more particularly, to a manufacturing method of a semiconductor device capable of preventing or reducing failures that may occur in the manufacturing process of the semiconductor device.

### DISCUSSION OF RELATED ART

As advances are made in technology, down-scaling of a semiconductor device is under development at a rapid speed. Accordingly, the sizes of components of the semiconductor device and the distance between components may decrease.

Martin Andreas Et al: "Reliability characterisation of plasma induced charging damage (PID) for MOS transistors of a silicon on insulator (SOI) process using product relevant test structures and fWLR methods" relates to product relevant reliability test structures for a complete characterization of plasma induced charging damage of SOI process nodes. The attributes of a PID assessment are identified, which are unique to SOI process nodes and which are implemented in an antenna design rule checker. These test structures are the basis for sophisticated antenna design rules. Combined with a PID stress and measurement sequence antenna ratios can be extracted, which do not put the product reliability at risk. Further, the difficulties for the implementation of an antenna design rule checker are highlighted.

Martin Andreas Et al: "Review on the reliability characterization of plasma-induced damage", discusses reliability characterization of plasma-induced damage. First, the basic degradation of a metal-oxide-semiconductor (MOS) gate oxide from plasma processing steps is described. Second, the reliability characterization techniques and basics are discussed and problem areas are highlighted. Discussion points include the antenna ratio definition, test structure layout employing MOS transistors with and without antennas, stress and measurement sequence including a revealing stress, use of protection elements against plasma-charging, plasma-charging effects on metal-insulator-metal capacitors, and plasma-charging effects on high-k dielectrics of field-effect transistors.

Shirota H Et al: "A new router for reducing "antenna effect" in ASIC design" relates to an efficient router for reducing "antenna effect" damage. The antenna effect is a phenomenon of gate-oxide degradation by charge buildup on conductors in plasma-based manufacturing processes. It directly influences yield and reliability of VLSIs. The amount of the degradation is a direct function of interconnect geometry (e.g., amount of floating conductors connecting to the gate oxide during the processes). The proposed router combines a traditional router and a modification of wires for reducing the antenna effect damage using a rip-up and reroute method. It reduces the damage with only a small penalty of die size and performance. The effectiveness of the router, which is implemented in the layout system HGALOP, is demonstrated by experimental results on 3-4 level metal industrial sea-of-gates (SOG) circuits.

### SUMMARY

The invention provides a manufacturing method of a semiconductor device capable of preventing or reducing the occurrence of failures in the semiconductor according to claim 1.

### BRIEF DESCRIPTION OF THE DRAWINGS

The features of the present invention will become more apparent by describing in detail examples thereof with reference to the accompanying drawings, in which:
FIGS. 1A through 1D are flowcharts of a manufacturing method of a semiconductor device, according to examples;
FIG. 2 is a flowchart of a manufacturing method of a semiconductor device, according to an example;
FIG. 3 is a flowchart of a manufacturing method of a semiconductor device, according to an example;
FIGS. 4A, 4B, and 5A through 5D are cross-sectional views of a manufacturing method of a semiconductor device, and cross-sectional views of semiconductor devices, according to examples;
FIGS. 6, 7, and 8 are cross-sectional views of a manufacturing method of semiconductor devices, and cross-sectional views of semiconductor devices, according to examples;
FIGS. 9A through 9C and 10 are cross-sectional views of a manufacturing method of a semiconductor device, according to examples; and
FIGS. 11 and 12 are cross-sectional views of a manufacturing method of a semiconductor device, according to examples.

### DETAILED DESCRIPTION OF THE EMBODIMENTS

Examples of the present inventive concept will be described more fully hereinafter with reference to the accompanying drawings. Like reference numerals may refer to like elements throughout the accompanying drawings.

It will be understood that the terms "first," "second," "third," etc. are used herein to distinguish one element from another, and the elements are not limited by these terms. Thus, a "first" element in an embodiment may be described as a "second" element in another embodiment.

It should be understood that descriptions of features or aspects within each embodiment should typically be considered as available for other similar features or aspects in other embodiments, unless the context clearly indicates otherwise.

As used herein, the singular forms "a", "an" and "the" are intended to include the plural forms as well, unless the context clearly indicates otherwise.

Herein, when two or more elements or values are described as being substantially the same as or about equal to each other, it is to be understood that the elements or values are identical to each other, the elements or values are equal to each other within a measurement error, or if measurably unequal, are close enough in value to be functionally equal to each other as would be understood by a person having ordinary skill in the art. For example, the term "about" as used herein is inclusive of the stated value and means within an acceptable range of deviation for the particular value as determined by one of ordinary skill in the art, considering the measurement in question and the error associated with measurement of the particular quantity (e.g., the limitations of the measurement system). For example, "about" may mean within one or more standard deviations as understood by one of the ordinary skill in the art. Further, it is to be understood that while parameters may be described herein as having "about" a certain value, according to exemplary embodiments, the parameter may be exactly the certain value or approximately the certain value within a measurement error as would be understood by a person having ordinary skill in the art.

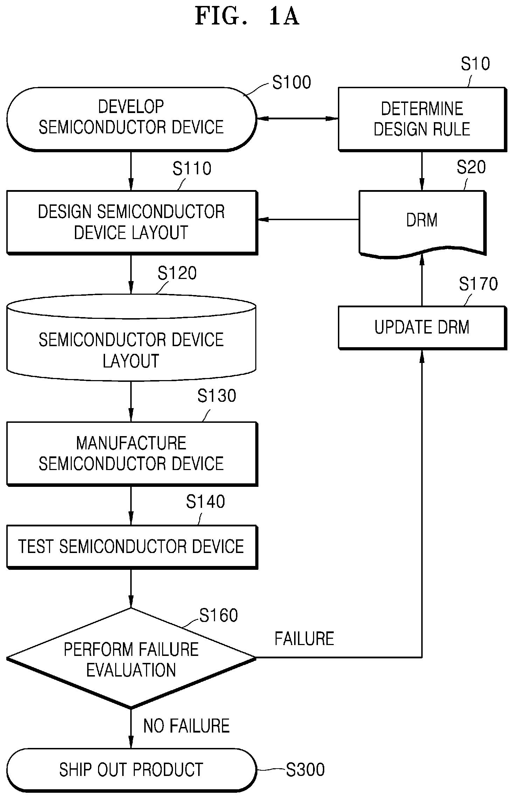

FIGS. 1A through 1D are flowcharts of a manufacturing method of a semiconductor device, according to embodiments.

Referring to FIG. 1A, a design rule is determined (S10). After the design rule is determined (S10), a semiconductor device to which the design rule is applied is developed (S100). In some embodiments, determination of the design rule (S10) may be performed together with a process of developing a semiconductor device (S100). The design rule may be determined based on a minimum line width indicating the resolution limit in photolithography technology. For example, the design rule may specify a rule in the same layer, such as minimum values of widths of a configuration (line widths), the spacing between components, and areas of the components. For example, the design rule may further specify rules between components arranged in different layers, such as the degrees of enclosure, extension, and overlap. The rules specified in the design rule, which are described above, are not limited thereto. For example, the design rule may further specify various rules depending on a semiconductor device to be developed.

The determined design rule is recorded or stored in a design rule manual (DRM) S20. The semiconductor device layout is designed based on the DRM S20 (S110). The DRM S20 may provide a guideline for designing the semiconductor device layout. Because a semiconductor device development engineer may design the semiconductor device layout based on the design rule recorded in the DRM S20, there may be restrictions on designing the semiconductor device layout when there are many rules specified in the design rule. For example, the DRM S20 may store the design rule, in which regulations are specified, that is, the design rule in which relatively few regulations are specified.

The semiconductor device may be manufactured using the designed semiconductor device layout S120 (S130). For example, by forming a plurality of masks for manufacturing a semiconductor device, based on the designed semiconductor device layout S120, and performing a wafer process using the plurality of masks, the semiconductor device may be manufactured.

Thereafter, the manufactured semiconductor device may be tested (S140). Testing of the manufactured semiconductor device (S140) may include, for example, tests for inspecting electrical characteristics of the semiconductor device, but is not limited thereto. For example, the testing of the manufactured semiconductor device (S140) may include all of destructive inspection and/or non-destructive inspection performed during or after manufacturing the semiconductor device.

Failure evaluation may be performed to identify whether a failure has occurred in the semiconductor device from the test result (S160). The failure evaluation of the manufactured semiconductor device may include a process of checking whether a failure has occurred in the semiconductor device by performing a failure analysis, and when a failure has occurred, identifying a location of the failure and evaluating the regulation specified in the design rule, and thereafter, determining the changed regulation.

When there is no failure in the semiconductor device, the completed semiconductor device may be shipped out as a product (S300). Alternatively, when there is no failure in the semiconductor device, the semiconductor device may be mass produced using the designed semiconductor device layout S120 and shipped out as a product (S300).

Causes of a failure occurring in the semiconductor device may vary, and methods of removing the failure may vary depending on the causes. Although only failures related to regulations specified in the design rule are described, it is to be understood that separate evaluation methods and removal methods may be performed for failures related to other causes.

For example, the failures that may occur in the semiconductor device may be a gate dielectric layer break, a channel region (active region) burn, or a gate electrode burn. In some embodiments, the channel region burn and the gate electrode burn may result from overheating of these respective components. The gate dielectric layer break, the channel region burn, and the gate electrode burn may be referred to as gate structure failure. For example, the failure evaluation of the manufactured semiconductor device may be related to failures including the gate structure failure.

When a failure occurs in the manufactured semiconductor device, the DRM S20 may be updated based on a result of the failure evaluation (S170). In other words, the design rule updated by changing the design rule recorded in the DRM S20 may be stored in the DRM S20. For example, when a failure occurs in the manufactured semiconductor device, a location of failure may be identified and an evaluation on regulations specified in the design rule may be performed, and then, the design rule may be updated by changing the regulation, and a DRM update storing the updated result in the DRM S20 may be performed (S170). A history, in which the design rule has been updated, may be recorded in the DRM S20. For example, the design rule, which has been determined and updated the first time, may be recorded altogether in the DRM S20.

Thereafter, after the semiconductor device layout is redesigned or corrected based on the updated DRM S20 (S110), the modified semiconductor device is manufactured (S130), and the manufactured semiconductor device may be shipped out as a product (S300). In some embodiments, testing S140 and failure evaluation S160 of the semiconductor device manufactured based on the updated DRM S20 may be performed again.

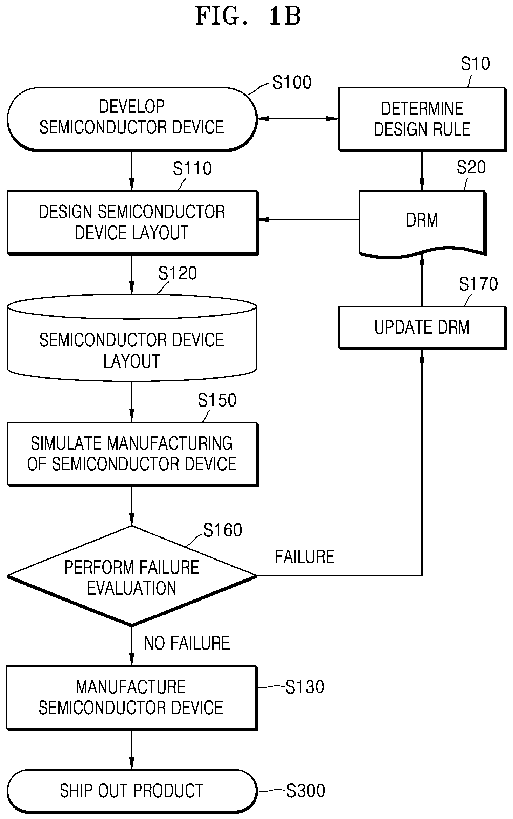

Referring to FIG. 1B, after the design rule is determined (S10), developing a semiconductor device, to which the design rule is applied, may be performed (S100). In some embodiments, determination of the design rule may be performed together (S10) in a process of performing semiconductor device development (S100). The determined design rule may be recorded or stored in the DRM S20.

The semiconductor device layout is designed based on the DRM S20 (S110). A simulation of manufacturing a semiconductor device may be performed using the designed semiconductor device layout S120 (S150). In the process of performing a simulation of manufacturing a semiconductor device, a test on a semiconductor device manufactured by simulation and a test of a semiconductor device during the process of manufacturing by simulation may be performed together.

Thereafter, the failure evaluation may be performed to identify whether a failure has occurred in the semiconductor device manufactured by the simulation (S160). The failure evaluation of the semiconductor device manufactured by the simulation may include a process of checking whether a failure has occurred in the semiconductor device, and when there is a failure, identifying a location of the failure, evaluating the regulation specified in the design rule, and thereafter, determining the changed regulation.

When there is no failure in the semiconductor device manufactured by the simulation, the semiconductor device may be manufactured/mass produced (S130) using the designed semiconductor device layout S120 and shipped out as a product (S300).

When a failure occurs in the semiconductor device manufactured by the simulation, the DRM S20 may be updated (S170). For example, when a failure occurs in a semiconductor device manufactured by the simulation, the location of the failure may be identified, the regulation specified in the design rule may be evaluated, the design rule may be updated by changing regulations, and the DRM S20 may be updated by storing the updated result in the DRM S20 (S170). The semiconductor device manufactured by simulation may be understood to be a simulation of a semiconductor device.

In some embodiments, the simulation of manufacturing a semiconductor device based on the updated DRM S20 may be performed (S150) and failure evaluation may be performed (S160) again.

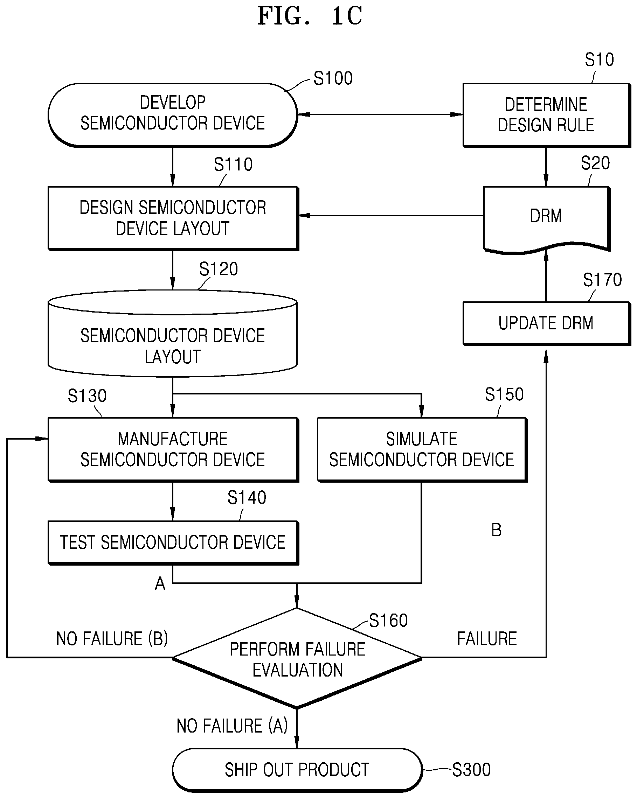

Referring to FIG. 1C, after the design rule is determined (S10), a semiconductor device, to which the design rule is applied, may be developed (S100). In some embodiments, the design rule may be determined (S10) also in a process of developing semiconductor device (S100).

The determined design rule is recorded or stored in the DRM S20. The semiconductor device layout is designed based on the DRM S20 (S110). The semiconductor device may be manufactured using the designed semiconductor device layout S120 (S130). Thereafter, the manufactured semiconductor device may be tested (S140). The failure evaluation may be performed to identify whether a failure has occurred in the semiconductor device as the test result (S160).

When there is no failure in the semiconductor device, the completed semiconductor device may be shipped out as a product (S300). Alternatively, when there is no failure in the semiconductor device, the semiconductor device may be mass produced using the designed semiconductor device layout S120 and shipped out as a product (S300).

In some embodiments, instead of manufacturing the semiconductor device (S130), a simulation of manufacturing the semiconductor device using the designed semiconductor device layout (S120) may be performed (S150). Alternatively, in some embodiments, apart from manufacturing (S130) and testing (S140) a semiconductor device, a simulation of manufacturing a semiconductor device using the designed semiconductor device layout S120 may be performed altogether (S150). Thereafter, it may be determined whether a failure has occurred in the semiconductor device manufactured by the simulation, or the failure evaluation may be performed (S160).

When a failure occurs in the manufactured semiconductor device and/or when a failure occurs in the semiconductor device manufactured by simulation, the DRM S20 may be updated (S170). For example, when a failure occurs in a manufactured semiconductor device or a semiconductor device manufactured by the simulation, the location of the failure may be identified, the regulation specified in the design rule may be evaluated, the design rule may be updated by changing the regulation, and the DRM S20 may be updated by storing the updated result in the DRM S20 (S170).

Thereafter, after the semiconductor device layout is redesigned or corrected based on the updated DRM S20 (S110), the modified semiconductor device may be manufactured (S130) by performing wafer processing, and the manufactured semiconductor device may be shipped out as a product (S300).

In some embodiments, testing on a semiconductor device manufactured based on the updated DRM S20 (S140), and/or simulation of manufacturing a semiconductor device (S150), and the failure evaluation (S160), may be performed again.

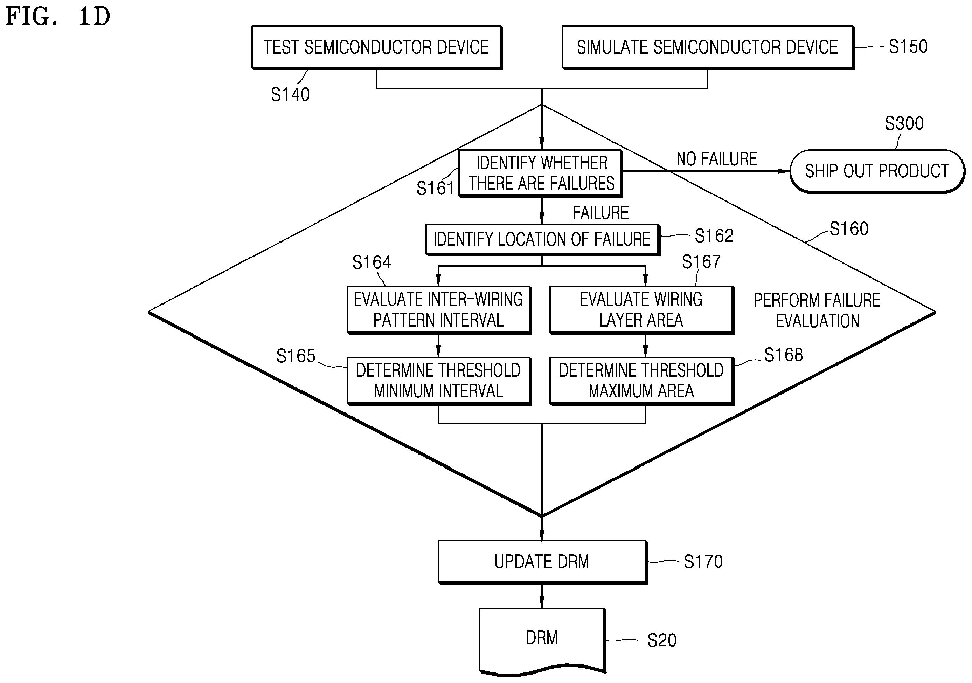

Referring to FIG. 1D, after testing the manufactured semiconductor device (S140), and/or performing a simulation of manufacturing the semiconductor device (S150), it may be determined whether a failure has occurred in the semiconductor device (the failure evaluation may be performed (S160)).

First, whether a failure has occurred in the semiconductor device may be identified (the failure evaluation may be verified) (S161). When there is no failure in the semiconductor device, the completed semiconductor device may be shipped out as a product, or the semiconductor device may be mass produced and shipped out as a product (S300).

The location of the failure may be identified (S162). For example, the failures that may occur in the semiconductor device may be a gate dielectric layer break, a channel region (active region) burn, or a gate electrode burn. After identifying the location of the failure that has occurred in the semiconductor device (S162), at the location of the failure, an inter-wiring pattern spacing evaluation (S164), and/or a wiring layer area evaluation (S167), may be performed. For example, the inter-wiring pattern spacing evaluation (S164) may be inclusively performed by considering a spacing between the location of the failure or a wiring pattern connected to the location of the failure, and another wiring pattern adjacent to the wiring pattern, whether the other wiring pattern is electrically floating during the manufacturing process of the semiconductor device, etc. For example, the wiring layer area evaluation (S167) may be inclusively performed by considering whether the other wiring pattern adjacent to the location of the failure or a wiring pattern connected to the location of the failure is electrically floating during the manufacturing process of the semiconductor device, an area of the other wiring pattern adjacent thereto, etc.

After the inter-wiring pattern spacing evaluation is performed (S164), when it is determined that a spacing between the location of the failure or a wiring pattern connected to the location of the failure, and another wiring pattern adjacent thereto is excessively close, a threshold minimum distance between adjacent wiring patterns may be determined (S 165). After the wiring layer area evaluation is performed (S167), when it is determined that the area of another wiring pattern adjacent to the location of the failure or adjacent to a wiring pattern connected to the location of the failure is excessively large, a threshold maximum area of the adjacent wiring pattern may be determined, and when there is a wiring pattern has a greater area than the threshold maximum area, a bridge pattern connected between wiring patterns at lower vertical levels than a wiring pattern having a greater area than the threshold maximum area may be additionally provided (S168).

When the threshold minimum distance and/or the threshold maximum area are determined, the DRM S20 may be updated (S170). In other words, the design rule updated by changing the design rule recorded in the DRM S20 may be stored in the DRM S20.

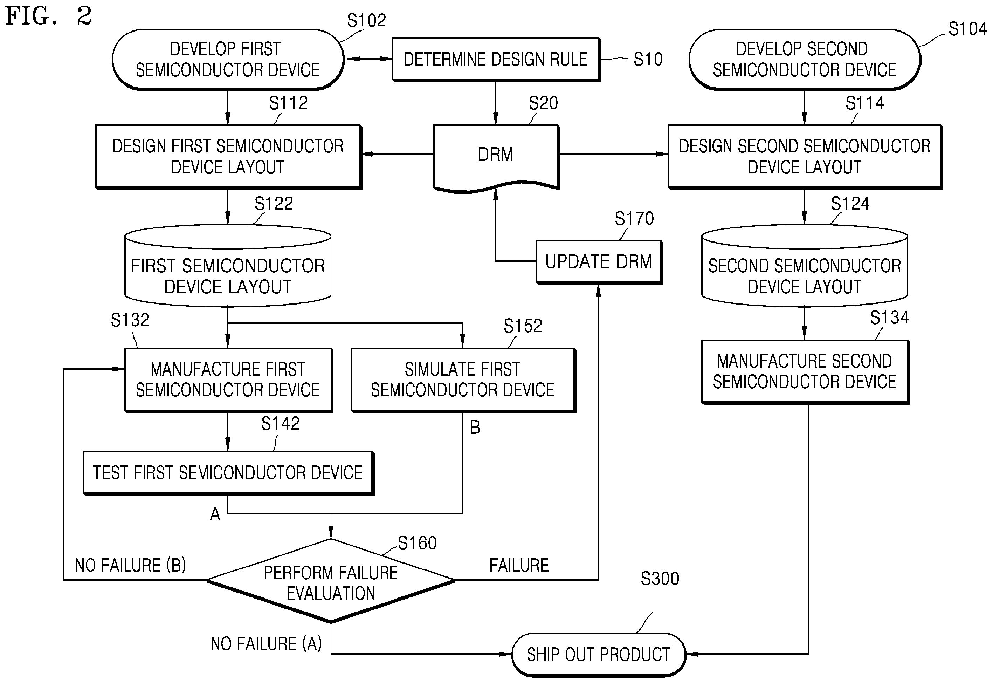

FIG. 2 is a flowchart of a manufacturing method of a semiconductor device, according to an embodiment.

Referring to FIG. 2, after the design rule is determined (S10), a first semiconductor device, to which the design rule is applied, may be developed (S102). The determined design rule is recorded or stored in the DRM S20. The first semiconductor device layout is designed based on the DRM S20 (S112). A first semiconductor device may be manufactured using the designed first semiconductor device layout S122 (S132). Thereafter, the manufactured first semiconductor device may be tested (S142). It may then be determined whether a failure has occurred in the first semiconductor device (the failure evaluation may be performed) (S160).

When there is no failure in the first semiconductor device, the completed first semiconductor device may be shipped out as a product (S300). Alternatively, when there is no failure in the first semiconductor device, the first semiconductor device may be mass produced using the designed first semiconductor device layout S122 and shipped out as a product (S300).

In some embodiments, instead of manufacturing the first semiconductor device (S132), a simulation of manufacturing the first semiconductor device using the designed first semiconductor device layout S122 may be performed (S152). Alternatively, in some embodiments, apart from manufacturing (S132) and testing (S142) of the first semiconductor device, a simulation of manufacturing the first semiconductor device using the designed first semiconductor device layout S122 may be performed altogether (S152). Thereafter, determination of whether a failure has occurred in the first semiconductor device manufactured by the simulation (the failure evaluation) may be performed (S160).

When a failure occurs in the manufactured first semiconductor device and/or when a failure occurs in the first semiconductor device manufactured by simulation, the DRM S20 may be updated (S170).

Thereafter, after the first semiconductor device layout is redesigned or corrected based on the updated DRM S20 (S112), the first semiconductor device is manufactured (S132), and the manufactured first semiconductor device may be shipped out as a product (S300).

A second semiconductor device may be developed using an updated design rule (S104). After the second semiconductor device layout is designed based on the updated DRM S20 (S114), the second semiconductor device may be manufactured using the designed second semiconductor device layout S124 (S134). Because the second semiconductor device is manufactured based on the updated DRM S20 (S134), a failure may not occur, and thus, the manufactured second semiconductor device may be shipped out as a product (S300).

In the manufacturing method of a semiconductor device according to embodiments of the inventive concept, a similar semiconductor device, for example, the second semiconductor device, may be developed (S104) and manufactured (S134) using the updated DRM S20, and thus, the second semiconductor device having no failure may be developed and manufactured in a short time, and shipped out as a product (S300).

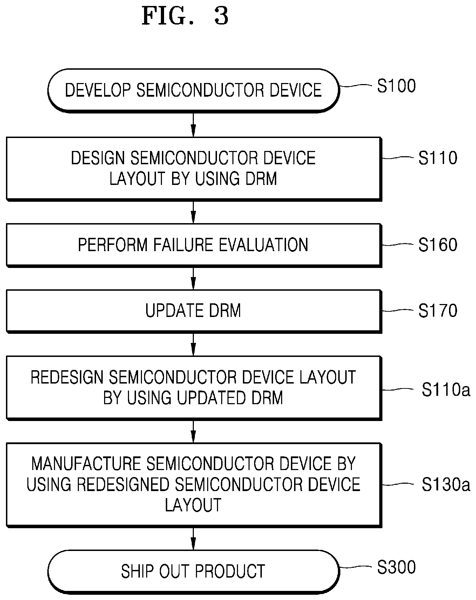

FIG. 3 is a flowchart of a manufacturing method of a semiconductor device, according to an embodiment.

Referring to FIG. 3, after the design rule (S10 in FIGS. 1A and 1B) is determined, a semiconductor device may be developed (S100). A semiconductor device layout is designed using the DRM (S20 in FIGS. 1A and 1B), in which the determined design rule is recorded (S110). When the failure evaluation (S160) is performed on the semiconductor device manufactured using the designed semiconductor device layout or on the semiconductor device manufactured by simulation, and a failure occurs in the semiconductor device, the DRM S20 may be updated (S170). After the semiconductor device layout is redesigned or corrected using the updated DRM S20 (S110a), the semiconductor device is manufactured using the re-designed semiconductor device layout (S130a), and shipped out as a product (S300).

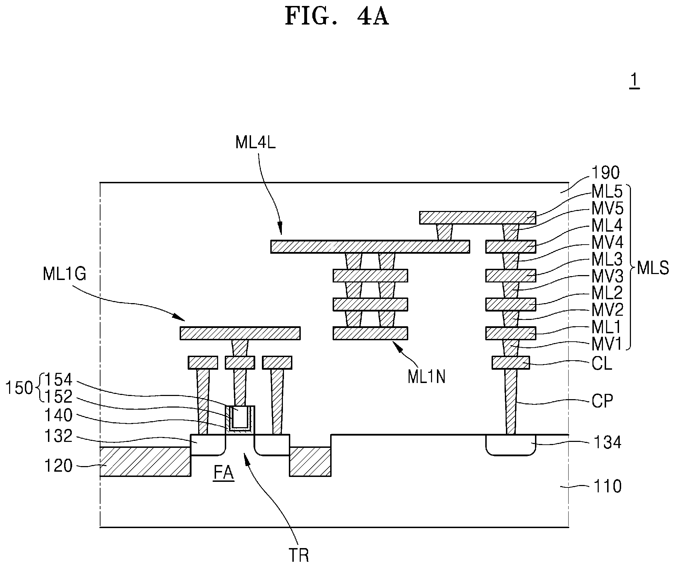

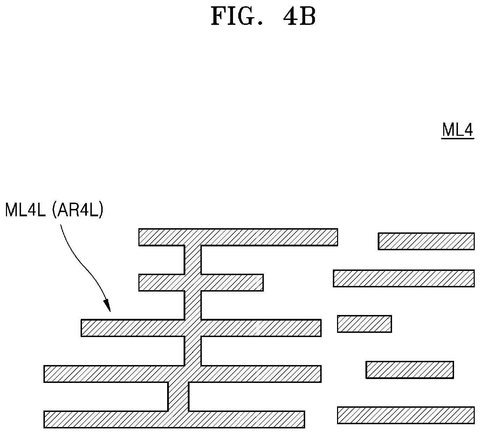

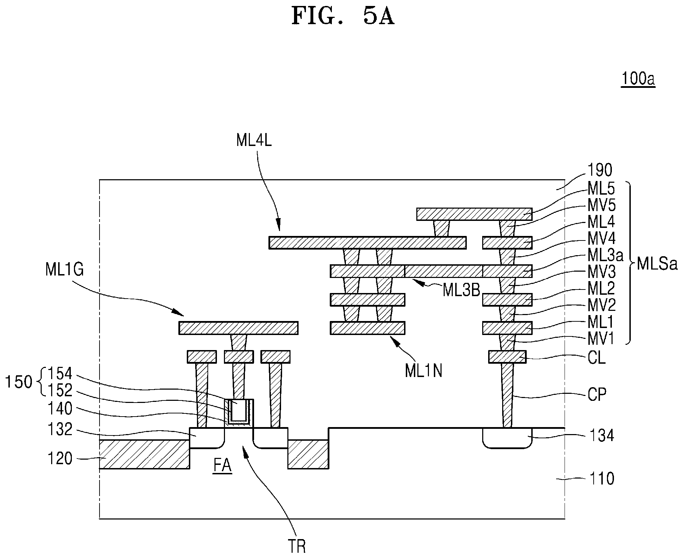

FIGS. 4A, 4B, and 5A through 5D are cross-sectional views of a manufacturing method of a semiconductor device 1, and cross-sectional views of semiconductor devices according to embodiments.

Referring to FIGS. 4A and 4B together, the semiconductor device 1 may include a substrate 110, a transistor TR formed on the substrate 110, a wiring structure MLS arranged on the substrate 110, and an inter-wiring insulating layer 190 surrounding the wiring structure MLS on the substrate 110.

The substrate 110 may include at least one of a Group III-V material and a Group IV material. For example, the substrate 110 may include a semiconductor material, such as Si and Ge, or a compound semiconductor material, such as SiGe, SiC, GaAs, InAs, and InP. The Group III-V material may include a binary, ternary, or quaternary compound including at least one Group III element and at least one Group V element. In some embodiments, when forming an NMOS transistor on a portion of the substrate 110, a portion of the substrate 110 may include any one of the III-V materials exemplified above. In some embodiments, when forming a PMOS transistor on a portion of the substrate 110, at least a portion of the substrate 110 may include Ge. In another example, the substrate 110 may have a semiconductor on insulator (SOI) structure. The substrate 110 may include a conductive region, for example, a well doped with impurities, or a structure doped with impurities.

The substrate 110 may have an active region FA limited by a device isolation layer 120. The device isolation layer 120 may be formed to fill at least a portion of a substrate trench formed by removing a portion of the substrate 110. The device isolation layer 120 may include, for example, an oxide, a nitride, or an oxynitride. In some embodiments, the device isolation layer 120 may include a liner layer covering at least portions of the bottom surface and the lower side of an inner side surface of the substrate trench, and a trench-buried layer covering the liner layer and filling at least a portion of the lower side of the substrate trench. In some embodiments, the liner layer may include an oxide, a nitride, or an oxynitride. For example, the liner layer may include a silicon oxide formed by thermal oxidation, such as silicon nitride (SiN), silicon oxynitride (SiON), silicon boronitride (SiBN), silicon carbide (SiC), SiC:H, silicon carbon nitride (SiCN), SiCN:H, silicon oxy carbon nitride (SiOCN), SiOCN:H, silicon oxy carbide (SiOC), polysilicon, or a combination thereof, but is not limited thereto. The trench-buried layer may include an oxide formed by a deposition process or a coating process. For example, the trench-buried layer may include fluoride silicate glass (FSG), undoped silicate glass (USG), boro-phospho-silicate glass (BPSG), phospho-silicate glass (PSG), flowable oxide (FOX), plasma enhanced tetra-ethyl-orthosilicate (PE-TEOS), or tonen silazene (TOSZ), but is not limited thereto.

In some embodiments, the active region FA may include a fin-type active region, in which an upper portion thereof protrudes in a fin shape over the device isolation layer 120. When the active region FA is a fin-type active region, the device isolation layer 120 may cover a portion of a lower side of sidewalls of the active region FA.

A first impurity region 132 and a second impurity region 134 arranged apart from each other may be arranged on a portion of the upper side of the substrate 110. For example, the first impurity region 132 may be formed by injecting impurities into portions of the active region FA. The second impurity region 134 may be formed by injecting impurities into a portion of the substrate 110. The first impurity region 132 may be arranged in pairs on portions of the active regions FA arranged apart from each other. For example, a pair of first impurity regions 132 arranged apart from each other at upper portions of the active region FA may include a source/drain region of the transistor TR.

The gate electrode 150 may be arranged on the active region FA. A gate dielectric layer 140 may be arranged between the active region FA and the gate electrode 150. The gate electrode 150 may be arranged on a portion of the active region FA between a pair of first impurity regions 132. For example, in a top view, the pair of first impurity regions 132 may be arranged respectively on both sides of the gate electrode 150. A portion of the active region FA arranged between the pair of first impurity regions 132 may include the channel region.

Each of the gate dielectric layer 140 and the gate electrode 150 may be formed using, for example, an atomic layer deposition (ALD) process, a chemical vapor deposition (CVD) process, a physical vapor deposition (PVD) process, a metal organic (MO) ALD (MOALD) process, or an MO CVD (MOCVD) process.

In some embodiments, the gate dielectric layer 140 may include a first dielectric layer and a second dielectric layer. The first dielectric layer may conformally cover the surface of the active region FA. The second dielectric layer may cover the first dielectric layer. The second dielectric layer may be arranged between the first dielectric layer and the gate electrode 150.

The second dielectric layer may include a material having a dielectric constant that is greater than a dielectric constant of the material forming the first dielectric layer. In some embodiments, the first dielectric layer may include an interface layer, and the second dielectric layer may include a high-k dielectric layer. For example, the first dielectric layer may include an oxide. In some embodiments, the first dielectric layer may include silicon oxide formed by thermal oxidation. For example, the second dielectric layer may include a material having a greater dielectric constant than silicon oxide. In some embodiments, the second dielectric layer may include a metal oxide or a metal oxynitride. For example, the second dielectric layer may have a dielectric constant of about 10 to about 25. In some embodiments, the second dielectric layer may include at least one of, for example, hafnium oxide (HfO), hafnium silicate (HfSiO), hafnium oxynitride (HfON), hafnium silicon oxynitride (HfSiON), lanthanum oxide (LaO), lanthanum aluminum oxide (LaAlO), zirconium oxide (ZrO), zirconium silicate (ZrSiO), zirconium oxynitride (ZrON), zirconium silicon oxynitride (ZrSiON), tantalum oxide (TaO), titanium oxide (TiO), barium strontium titanium oxide (BaSrTiO), barium titanium oxide (BaTiO), strontium titanium oxide (SrTiO), yttrium oxide (YO), aluminum oxide (AlO), and lead scandium tantalum oxide (PbScTaO). For example, the second dielectric layer may include HfO₂, Al₂O₃, HfAlO₃, Ta₂O₃, or TiO₂.

The gate electrode 150 may have a structure in which the first electrode layer 152 and a second electrode layer 154 are sequentially stacked. The first electrode layer 152 may include, for example, at least one metal of Ti, Ta, W, Ru, Nb, Mo, and Hf, and the second electrode layer 154 may include, for example, a W layer or an Al layer. In some embodiments, the first electrode layer 152 may include a work function metal-containing layer that may be used to adjust a work function of the transistor TR. The work-function metal-containing layer may include, for example, at least one metal of Ti, W, Ru, Nb, Mo, Hf, Ni, Co, Pt, Yb, Tb, Dy, Er, and Pd. In some embodiments, the gate electrode 150 may have a stacked structure of TiAlC/TiN/W, a stacked structure of TiN/TaN/TiAlC/TiN/W, or a stacked structure of TiN/TaN/TiN/TiAlC/TiN/W, but is not limited thereto.

The active region FA, a pair of first impurity regions 132, the gate dielectric layer 140, and the gate electrode 150 may constitute the transistor TR. Although FIG. 4A illustrates that the transistor TR includes a FinFET, embodiments are not limited thereto. For example, the transistor TR may include a planar transistor. Alternatively, for example, the transistor TR may include a multi-channel transistor including a plurality of nano sheets functioning as a channel region on the active region.

The pair of first impurity regions 132, the second impurity region 134, and the gate electrode 150 may be electrically connected to connection conductive lines CL. Contact plugs CP may be arranged between the pair of first impurity regions 132, the second impurity region 134, and the gate electrode 150 and the connection conductive lines CL. For example, each of the contact plugs CP may be connected to any one of the pair of first impurity regions 132, the second impurity region 134, and the gate electrode 150, and the connection conductive lines CL may be respectively connected to the contact plugs CP. Each of the connection conductive lines CL may be electrically connected to a first wiring pattern ML1 via a first wiring via MV1. One first impurity region of the pair of first impurity regions 132 may be electrically connected to the second impurity region 134.

The wiring structure MLS may include a plurality of wiring patterns arranged at different vertical levels. Each of the plurality of wiring patterns may have, for example, a polygonal shape, such as a line shape, a bar shape, or a square shape in a plan view. For example, the plurality of wiring patterns may include the first wiring pattern ML1, a second wiring pattern ML2, a third wiring pattern ML3, a fourth wiring pattern ML4, and a fifth wiring pattern ML5, which are arranged at different vertical levels from each other. Although FIGS. 4A through 8 illustrate that the wiring structure MLS includes a plurality of wiring patterns at five different vertical levels, embodiments are not limited thereto. For example, the wiring structure MLS may include a plurality of wiring patterns at two or more different vertical levels.

Although in FIGS. 4A through 8 the fifth wiring pattern ML5 is illustrated as being arranged at the highest vertical level among the first wiring pattern ML1, the second wiring pattern ML2, the third wiring pattern ML3, the fourth wiring pattern ML4, and the fifth wiring pattern ML5, embodiments are not limited thereto. According to embodiments, because the fifth wiring pattern ML5 is at a relatively upper side, other wiring patterns may be further arranged on the fifth wiring pattern ML5. Similarly, although in FIGS. 4A through 8 the first wiring pattern ML1 is illustrated as being arranged at the lowest vertical level among the first wiring pattern ML1, the second wiring pattern ML2, the third wiring pattern ML3, the fourth wiring pattern ML4, and the fifth wiring pattern ML5, embodiments are not limited thereto. According to embodiments, because the first wiring pattern ML1 is arranged at a relatively lower side, other wiring patterns may be further arranged under the first wiring pattern ML1.

The wiring structure MLS may include a plurality of wiring vias arranged at different vertical levels from each other. Each of the plurality of wiring vias may have a pillar shape extending in a vertical direction. In some embodiments, each of the plurality of wiring vias may have a tapered shape extending from an upper side thereof to a lower side thereof with a narrowing horizontal width. For example, the plurality of wiring vias may include the first wiring via MV1, a second wiring via MV2, a third wiring via MV3, a fourth wiring via MV4, and a fifth wiring via MV5. The first wiring via MV1 may be connected to a lower surface of the first wiring pattern ML1, and electrically connected between the first wiring pattern ML1 and the components under the first wiring pattern ML1. For example, the first wiring via MV1 may be electrically connected between the first wiring pattern ML1 and the connection conductive line CL. The second wiring via MV2 may be connected to a lower surface of the second wiring pattern ML2, and electrically connected between the second wiring pattern ML2 and the components under the second wiring pattern ML2. For example, the second wiring via MV2 may be electrically connected between the second wiring pattern ML2 and the first wiring pattern ML1. The third wiring via MV3 may be connected to a lower surface of the third wiring pattern ML3, and electrically connected between the third wiring pattern ML3 and the components under the third wiring pattern ML3. For example, the third wiring via MV3 may be electrically connected between the third wiring pattern ML3 and the second wiring pattern ML2. The fourth wiring via MV4 may be connected to a lower surface of the fourth wiring pattern ML4, and electrically connected between the fourth wiring pattern ML4 and the components under the fourth wiring pattern ML4. For example, the fourth wiring via MV4 may be electrically connected between the fourth wiring pattern ML4 and the third wiring pattern ML3. The fifth wiring via MV5 may be connected to a lower surface of the fifth wiring pattern ML5, and electrically connected between the fifth wiring pattern ML5 and the components under the fifth wiring pattern ML5. For example, the fifth wiring via MV5 may be electrically connected between the fifth wiring pattern ML5 and the fourth wiring pattern ML4.

Each of the first wiring pattern ML1, the second wiring pattern ML2, the third wiring pattern ML3, the fourth wiring pattern ML4, and the fifth wiring pattern ML5, and each of the first wiring via MV1, the second wiring via MV2, the third wiring via MV3, the fourth wiring via MV4, and the fifth wiring via M5, may be provided in plural.

The inter-wiring insulating layer 190 may surround the wiring structure MLS on the substrate 110. In some embodiments, the inter-wiring insulating layer 190 may surround the gate electrode 150, the connection conductive lines CL, and the contact plugs CP, together with the wiring structure MLS on the substrate 110. For example, the inter-wiring insulating layer 190 may include a plurality of stacked insulating layers. The inter-wiring insulating layer 190 may include an insulating material having a lower dielectric constant than, for example, silicon oxide, silicon nitride, silicon oxynitride, or silicon oxide. In some embodiments, at least a portion of the inter-wiring insulating layer 190 may include an ultra low k (ULK) layer having an ultra low dielectric constant k of about 2.2 to about 2.4. The ULK layer may include a SiOC layer or a SiCOH layer.

A wiring pattern arranged at a relatively upper side, for example, the fifth wiring pattern ML5, may be electrically connected to the substrate 110 via the fifth wiring via MV5, the fourth wiring pattern ML4, the fourth wiring via MV4, the third wiring pattern ML3, the third wiring via MV3, the second wiring pattern ML2, the second wiring via MV2, the first wiring pattern ML1, the first wiring via MV1, the connection conductive line CL, the contact plug CP, and the second impurity region 134. For example, the second impurity region 134 may reduce the contact resistance between the contact plug CP and the substrate 110. The fifth wiring via MV5, the fourth wiring pattern ML4, the fourth wiring via MV4, the third wiring pattern ML3, the third wiring via MV3, the second wiring pattern ML2, the second wiring via MV2, the first wiring pattern ML1, and the first wiring via MV1, which are arranged between the fifth wiring pattern ML5 and the second impurity region 134 and electrically connect the fifth wiring pattern ML5 to the second impurity region 134, may be called a fifth connection wiring via, a fourth connection wiring pattern, a fourth connection wiring via, a third connection wiring pattern, a third connection wiring via, a second connection wiring pattern, a second connection wiring via, a first connection wiring pattern, and a first connection wiring via, respectively.

In FIGS. 4A through 8, it is illustrated that the fifth wiring pattern ML5 may be electrically connected to the substrate 110 via the fifth wiring via MV5, the fourth wiring pattern ML4, the fourth wiring via MV4, the third wiring pattern ML3, the third wiring via MV3, the second wiring pattern ML2, the second wiring via MV2, the first wiring pattern ML1, the first wiring via MV1, the connection conductive line CL, the contact plug CP, and the second impurity region 134, in sequence, but embodiments are not limited thereto. For example, in some embodiments, the fifth wiring pattern ML5 may be electrically connected to the substrate 110 via the fifth wiring via MV5, the fourth wiring pattern ML4, the fourth wiring via MV4, the third wiring pattern ML3, the third wiring via MV3, the second wiring pattern ML2, the second wiring via MV2, the first wiring pattern ML1, the first wiring via MV1, the connection conductive line CL, at least one of the contact plugs CP, and the second impurity region 134. In some embodiments, the fifth wiring via MV5 may also be connected between the bottom surface of the fifth wiring pattern ML5 and the second impurity region 134.

A wiring pattern arranged relatively at an upper side, for example, the fifth wiring pattern ML5, may be electrically connected to any one of other wiring patterns, which are not electrically connected to the substrate 110 without using the fifth wiring pattern ML5, for example, the fourth wiring pattern ML4, the third wiring pattern ML3, the second wiring pattern ML2, and the first wiring pattern ML1, which are not electrically connected to the substrate 110. At least one of other wiring patterns, which are not electrically connected to the substrate 110 without using the fifth wiring pattern ML5, for example, the fourth wiring pattern ML4, the third wiring pattern ML3, the second wiring pattern ML2, and the first wiring pattern ML1, may be electrically floated from the substrate 110 before the fifth wiring pattern ML5 is formed.

At least one of a plurality of first wiring patterns ML1 may include a gate wiring pattern ML1G electrically connected to the gate electrode 150. At least one of the plurality of first wiring patterns ML1 may be adjacent to the gate wiring pattern ML1G, and may include a first adjacent wiring pattern ML1N, which is electrically connected to the substrate 110 only via the fifth wiring pattern ML5, which is floated from the substrate 110 before the fifth wiring pattern ML5 is formed. At least one of the plurality of wiring patterns, for example, at least one of a plurality of fourth wiring patterns ML4, may include a target wiring pattern ML4L, which is electrically connected to the substrate 110 only via the fifth wiring pattern ML5, which is electrically floated from the substrate 110 before the fifth wiring pattern ML5 is formed and has a relatively large area. The target wiring pattern ML4L may have an area AR4L, which is relatively larger than areas of object wiring patterns at an identical vertical level thereto, for example, the fourth wiring patterns ML4. The target wiring pattern ML4L may refer to the fourth wiring patterns ML4 connected to each other at an identical vertical level. In other words, the area AR4L of the relatively large target wiring pattern ML4L may mean a total area of the fourth wiring patterns ML4 connected to each other at the identical vertical level. The area AR4L of the target wiring pattern ML4L may be hundreds µm² to thousands µm². In some embodiments, the maximum area of the target wiring pattern ML4L may be about 300 µm².

The target wiring pattern ML4L may be electrically connected to the first adjacent wiring pattern ML1N. For example, the target wiring pattern ML4L may be electrically connected to the first adjacent wiring pattern ML1N via the fourth wiring via MV4, the third wiring pattern ML3, the third wiring via MV3, the second wiring pattern ML2, and the second wiring via MV2. The target wiring pattern ML4L and the first adjacent wiring pattern ML1N may be electrically floated from the substrate 110 before the fifth wiring pattern ML5 is formed. The fourth wiring via MV4, the third wiring pattern ML3, the third wiring via MV3, the second wiring pattern ML2, and the second wiring via MV2, which are arranged between the target wiring pattern ML4L and the first adjacent wiring pattern ML1N, and electrically connect the target wiring pattern ML4L to the first adjacent wiring pattern ML1N, may be referred to as a fourth adjacent wiring via, a third adjacent wiring pattern, a third adjacent wiring via, a second adjacent wiring pattern, and a second adjacent wiring via, respectively.

At the same vertical level, the first adjacent wiring pattern ML1N and the first connection wiring pattern may be arranged apart from each other. At the same vertical level, the second adjacent wiring pattern ML2N and the second connection wiring pattern may be arranged apart from each other. At the same vertical level, the third adjacent wiring pattern ML3N and the third connection wiring pattern may be arranged apart from each other. At the same vertical level, the target wiring pattern ML4L and the fourth connection wiring pattern may be arranged apart from each other.

The semiconductor device 1 illustrated in FIGS. 4A and 4B includes a semiconductor device manufactured (see S130) using the semiconductor device layout S120 designed based on the DRM S20 described with reference to FIGS. 1A through 1D. The area AR4L of the target wiring pattern ML4L may be an area satisfying the design rule recorded in the DRM S20.

Referring to FIG. 5A, a semiconductor device 100a may include the substrate 110, the transistor TR formed on the substrate 110, a wiring structure MLSa arranged on the substrate 110, and the inter-wiring insulating layer 190 surrounding the wiring structure MLSa on the substrate 110.

The wiring structure MLSa may include a plurality of wiring patterns arranged at different vertical levels from each other. For example, the plurality of wiring patterns may include the first wiring pattern ML1, the second wiring pattern ML2, a third wiring pattern ML3a, the fourth wiring pattern ML4, and the fifth wiring pattern ML5, which are arranged at different vertical levels from each other. The wiring structure MLSa may include a plurality of wiring vias arranged at different vertical levels from each other. For example, the plurality of wiring vias may include the first wiring via MV1, the second wiring via MV2, the third wiring via MV3, the fourth wiring via MV4, and the fifth wiring via MV5.

Compared to the third wiring pattern ML3 included in the wiring structure MLS included in the semiconductor device 1 illustrated in FIGS. 4A and 4B, the third wiring pattern ML3a included in the wiring structure MLSa included in the semiconductor device 100a illustrated in FIG. 5A may further include a bridge wiring pattern ML3B. In FIG. 5A, the bridge wiring pattern ML3B is illustrated as being included in the third wiring pattern ML3, but embodiments are not limited thereto. For example, according to embodiments, the bridge wiring pattern ML3B may be included in a wiring pattern arranged at a lower vertical level than the target wiring pattern ML4L.

The target wiring pattern ML4L may be electrically connected to the substrate 110 via the bridge wiring pattern ML3B. For example, the target wiring pattern ML4L may be electrically connected to the substrate 110 by sequentially passing through the fourth wiring via MV4, the third wiring pattern ML3a including the bridge wiring pattern ML3B, the third wiring via MV3, the second wiring pattern ML2, the second wiring via MV2, the first wiring pattern ML1, the first wiring via MV1, the connection conductive line CL, the contact plug CP, and the second impurity region 134. The target wiring pattern ML4L may be electrically connected to the substrate 110 via the bridge wiring pattern ML3B without passing through a wiring pattern arranged at a relatively upper side, for example, the fifth wiring pattern ML5. Thus, in embodiments, the target wiring pattern ML4L is not electrically floated from the substrate 110 even before the fifth wiring pattern ML5 is formed, but may be electrically connected to the substrate 110 via the bridge wiring pattern ML3B.

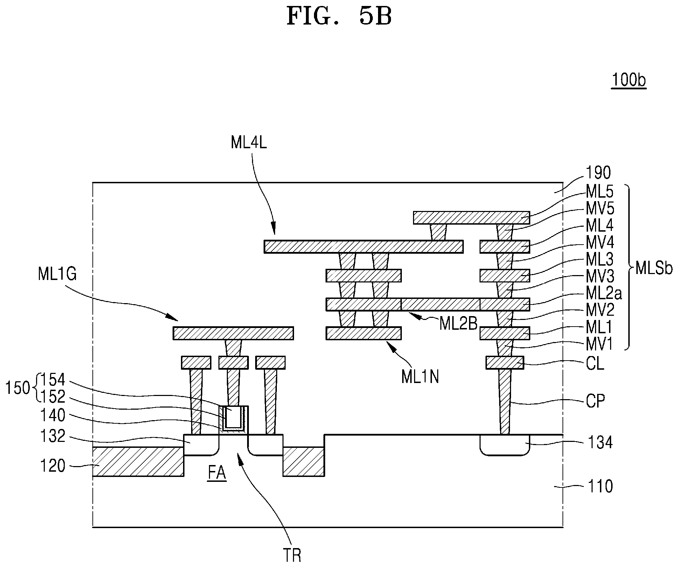

Referring to FIG. 5B, a semiconductor device 100b may include the substrate 110, the transistor TR formed in a portion of the substrate 110 and on the substrate 110, a wiring structure MLSb arranged on the substrate 110, and the inter-wiring insulating layer 190 surrounding the wiring structure MLSb on the substrate 110.

The wiring structure MLSb may include a plurality of wiring patterns arranged at different vertical levels from each other. For example, the plurality of wiring patterns may include the first wiring pattern ML1, a second wiring pattern ML2a, the third wiring pattern ML3, the fourth wiring pattern ML4, and the fifth wiring pattern ML5, which are arranged at different vertical levels from each other. The wiring structure MLSb may include a plurality of wiring vias arranged at different vertical levels from each other. For example, the plurality of wiring vias may include the first wiring via MV1, the second wiring via MV2, the third wiring via MV3, the fourth wiring via MV4, and the fifth wiring via MV5.

Compared to the second wiring pattern ML2 included in the wiring structure MLS included in the semiconductor device 1 illustrated in FIGS. 4A and 4B, the second wiring pattern ML2a included in the wiring structure MLSb included in the semiconductor device 100b illustrated in FIG. 5B may further include a bridge wiring pattern ML2B.

The target wiring pattern ML4L may be electrically connected to the substrate 110 via the bridge wiring pattern ML2B. For example, the target wiring pattern ML4L may be electrically connected to the substrate 110 by sequentially passing through the fourth wiring via MV4, the third wiring pattern ML3, the third wiring via MV3, the second wiring pattern ML2a including the bridge wiring pattern ML2B, the second wiring via MV2, the first wiring pattern ML1, the first wiring via MV1, the connection conductive line CL, the contact plug CP, and the second impurity region 134. The target wiring pattern ML4L may be electrically connected to the substrate 110 via the bridge wiring pattern ML2B without passing through a wiring pattern arranged at a relatively upper side, for example, the fifth wiring pattern ML5. Thus, in embodiments, the target wiring pattern ML4L is not electrically floated from the substrate 110 even before the fifth wiring pattern ML5 is formed, but may be electrically connected to the substrate 110 via the bridge wiring pattern ML2B.

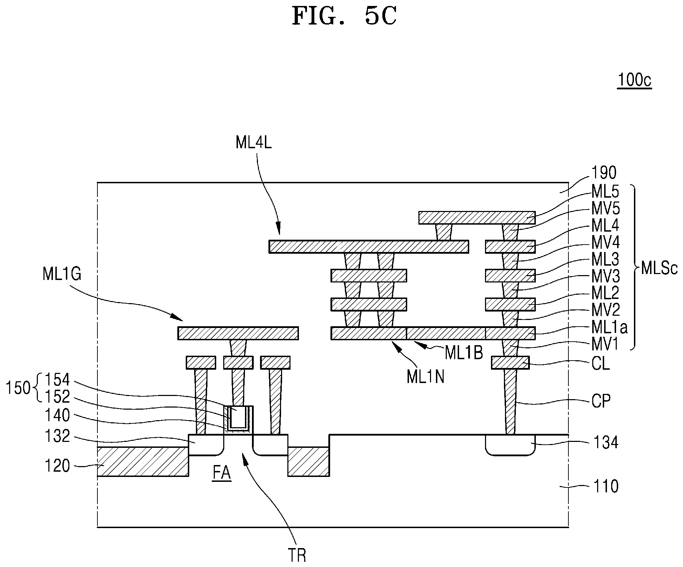

Referring to FIG. 5C, a semiconductor device 100c may include the substrate 110, the transistor TR formed in a portion of the substrate 110 and on the substrate 110, a wiring structure MLSc arranged on the substrate 110, and the inter-wiring insulating layer 190 surrounding the wiring structure MLSc on the substrate 110.

The wiring structure MLSc may include a plurality of wiring patterns arranged at different vertical levels from each other. For example, the plurality of wiring patterns may include a first wiring pattern ML1a, the second wiring pattern ML2, the third wiring pattern ML3, the fourth wiring pattern ML4, and the fifth wiring pattern ML5, which are arranged at different vertical levels from each other. A wiring structure MLSc may include a plurality of wiring vias arranged at different vertical levels from each other. For example, the plurality of wiring vias may include the first wiring via MV1, the second wiring via MV2, the third wiring via MV3, the fourth wiring via MV4, and the fifth wiring via MV5.

Compared to the first wiring pattern ML1 included in the wiring structure MLS included in the semiconductor device 1 illustrated in FIGS. 4A and 4B, the first wiring pattern ML1a included in the wiring structure MLSc included in the semiconductor device 100c illustrated in FIG. 5C may further include a bridge wiring pattern ML1B.

The target wiring pattern ML4L may be electrically connected to the substrate 110 via the bridge wiring pattern ML1B. For example, the target wiring pattern ML4L may be electrically connected to the substrate 110 by sequentially passing through the fourth wiring via MV4, the third wiring pattern ML3, the third wiring via MV3, the second wiring pattern ML2, the second wiring via MV2, the first wiring pattern ML1a including the bridge wiring pattern ML1B, the first wiring via MV1, the connection conductive line CL, the contact plug CP, and the second impurity region 134. The target wiring pattern ML4L may be electrically connected to the substrate 110 via a bridge wiring pattern ML1B without passing through a wiring pattern arranged at a relatively upper side, for example, the fifth wiring pattern ML5. Thus, in embodiments, the target wiring pattern ML4L is not electrically floated from the substrate 110 even before the fifth wiring pattern ML5 is formed, but may be electrically connected to the substrate 110 via the bridge wiring pattern ML1B.

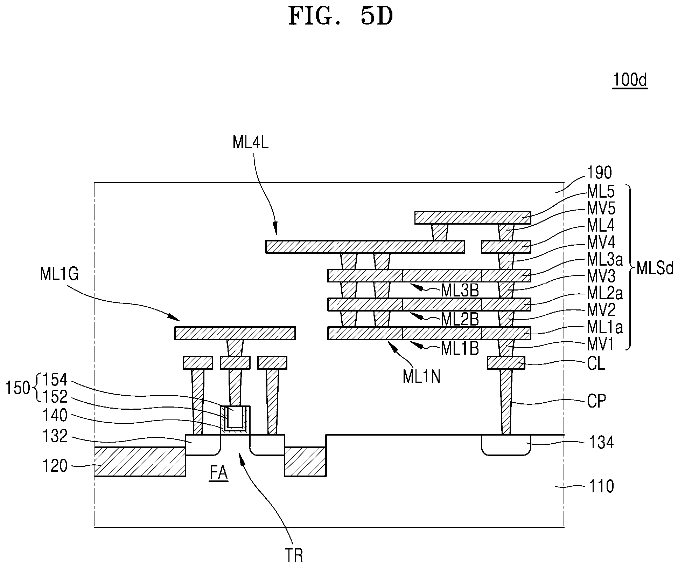

Referring to FIG. 5D, a semiconductor device 100d may include the substrate 110, the transistor TR formed in a portion of the substrate 110 and on the substrate 110, a wiring structure MLSd arranged on the substrate 110, and the inter-wiring insulating layer 190 surrounding the wiring structure MLSd on the substrate 110.

The wiring structure MLSd may include a plurality of wiring patterns arranged at different vertical levels from each other. For example, the plurality of wiring patterns may include a first wiring pattern ML1a, the second wiring pattern ML2a, the third wiring pattern ML3a, the fourth wiring pattern ML4, and the fifth wiring pattern ML5, which are arranged at different vertical levels from each other. The wiring structure MLSd may include a plurality of wiring vias arranged at different vertical levels from each other. For example, the plurality of wiring vias may include the first wiring via MV1, the second wiring via MV2, the third wiring via MV3, the fourth wiring via MV4, and the fifth wiring via MV5.

Compared to the first wiring pattern ML1, the second wiring pattern ML2, and the third wiring pattern ML3 included in the wiring structure MLS included in the semiconductor device 1 illustrated in FIGS. 4A and 4B, the first wiring pattern ML1a, the second wiring pattern ML2a, and the third wiring pattern ML3a included in the wiring structure MLSd included in the semiconductor device 100d illustrated in FIG. 5D may further include bridge wiring patterns ML1B, ML2B, and ML3B, respectively. The bridge wiring pattern ML1B included in the first wiring pattern ML1a may be referred to as a first bridge wiring pattern, the bridge wiring pattern ML2B included in the second wiring pattern ML2a may be referred to as a second bridge wiring pattern, and the bridge wiring pattern ML3B included in the third wiring pattern ML3a may be referred to as a third bridge wiring pattern.

The target wiring pattern ML4L may be electrically connected to the substrate 110 via the bridge wiring patterns ML1B, ML2B, and ML3B. The target wiring pattern ML4L may be electrically connected to the substrate 110 via the bridge wiring patterns ML1B, ML2B, and ML3B without passing through a wiring pattern arranged at a relatively upper side, for example, the fifth wiring pattern ML5. Thus, in embodiments, the target wiring pattern ML4L is not electrically floated from the substrate 110 even before the fifth wiring pattern ML5 is formed, but may be electrically connected to the substrate 110 via the bridge wiring patterns ML1B, ML2B, and ML3B.

The semiconductor devices 100a, 100b, 100c, and 100d illustrated in FIGS. 5A through 5D may include the semiconductor device S130 manufactured using the semiconductor device layout S120 designed based on the updated DRM S20 described with reference to FIGS. 1A through 1D. When the target wiring pattern ML4L having a relatively large area AR4L is present, for example, an area larger than the threshold maximum area, a design rule for adding the bridge wiring patterns ML1B, ML2B, and ML3B connecting wiring patterns arranged at lower vertical levels than the target wiring pattern ML4L may be recorded.

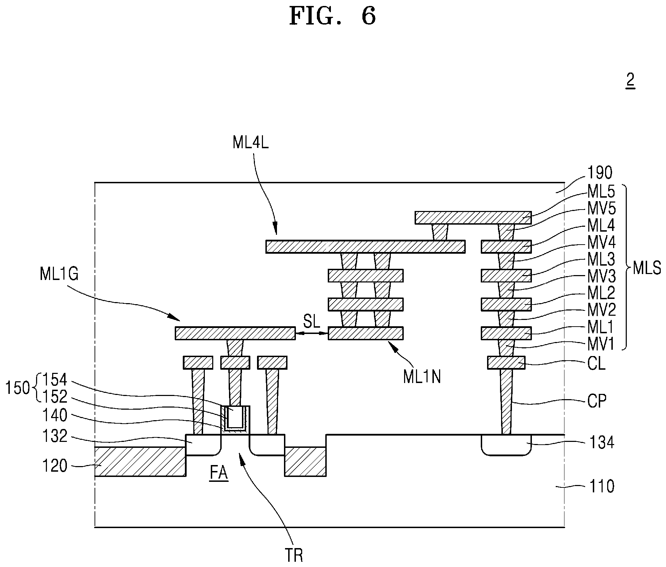

FIGS. 6, 7, and 8 are cross-sectional views of a manufacturing method of semiconductor devices, and cross-sectional views of semiconductor devices, according to embodiments.

Referring to FIG. 6, a semiconductor device 2 may include the substrate 110, the transistor TR formed in a portion of the substrate 110 and on the substrate 110, the wiring structure MLS arranged on the substrate 110, and the inter-wiring insulating layer 190 surrounding the wiring structure MLS on the substrate 110. The semiconductor device 2 may be generally the same as the semiconductor device 1 illustrated in FIGS. 4A and 4B. For convenience of explanation, components having identical reference numbers are identical components, and thus, duplicate descriptions thereof are omitted.

At least one of a plurality of first wiring patterns ML1 may include the gate wiring pattern ML1G electrically connected to the gate electrode 150. At least one of the plurality of first wiring patterns ML1 may be adjacent to the gate wiring pattern ML1G, and may include a first adjacent wiring pattern ML1N, which is electrically connected to the substrate 110 only via the fifth wiring pattern ML5, which is floated from the substrate 110 before the fifth wiring pattern ML5 is formed. The gate wiring pattern ML1G and the first adjacent wiring pattern ML1N have a first separation interval SL, and may be arranged apart from each other in a horizontal direction. The first separation interval SL may be several nm to several tens of nm.

The semiconductor device 2 illustrated in FIG. 6 may be the semiconductor device manufactured (S130) using the semiconductor device layout S120 designed based on the DRM S20 described with reference to FIGS. 1A through 1D, or the semiconductor device manufactured using simulation (S150) using the designed semiconductor device layout S120. The first separation interval SL between the gate wiring pattern ML1G and the first adjacent wiring pattern ML1N may have an area satisfying the design rule recorded in the DRM S20.

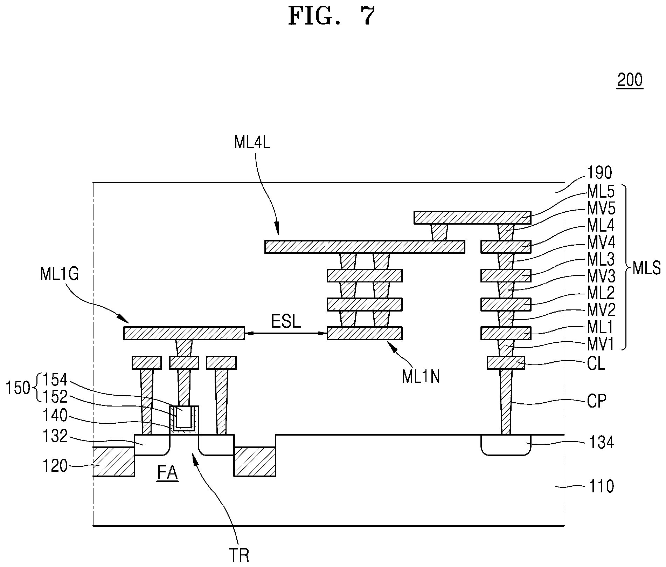

Referring to FIG. 7, a semiconductor device 200 may include the substrate 110, the transistor TR formed in a portion of the substrate 110 and on the substrate 110, the wiring structure MLS arranged on the substrate 110, and the inter-wiring insulating layer 190 surrounding the wiring structure MLS on the substrate 110.

Compared to the semiconductor device 2 illustrated in FIG. 6, the gate wiring pattern ML1G and the first adjacent wiring pattern ML1N included in the semiconductor device 200 illustrated in FIG. 7 may have a second separation interval ESL, and may be arranged apart from each other in a horizontal direction. The second separation interval ESL may be greater than the first separation interval SL. The second separation interval ESL may be greater than the first separation interval SL by several nm to several tens of nm.

The semiconductor device 200 illustrated in FIG. 7 may include the semiconductor device manufactured (S130) using the semiconductor device layout S120 designed based on the updated DRM S20 described with reference to FIGS. 1A through 1D. In the updated DRM S20, a design rule may be recorded, in which the first adjacent wiring pattern ML1N, which is adjacent to the gate wiring pattern ML1G but is electrically floated from the substrate 110 before the fifth wiring pattern ML5 is formed, has a minimum separation interval greater than the minimum separation interval between the other first wiring patterns ML1.

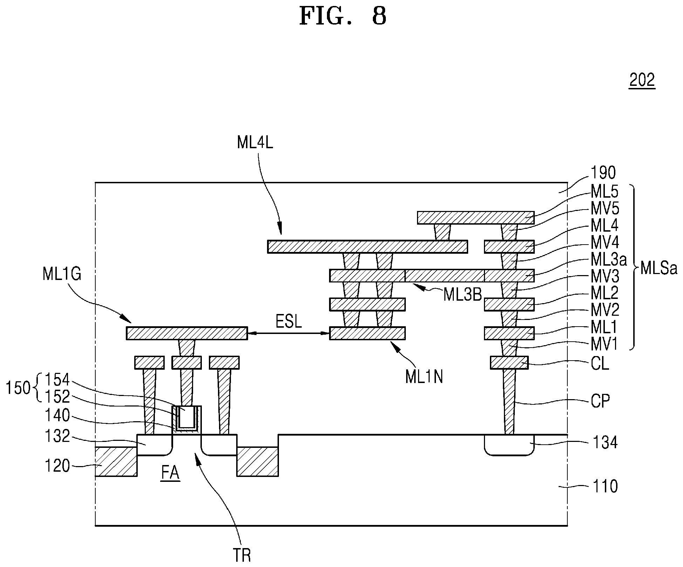

Referring to FIG. 8, a semiconductor device 202 may include the substrate 110, the transistor TR formed in a portion of the substrate 110 and on the substrate 110, the wiring structure MLSa arranged on the substrate 110, and the inter-wiring insulating layer 190 surrounding the wiring structure MLSa on the substrate 110.

Compared to the semiconductor device 2 illustrated in FIG. 6, the gate wiring pattern ML1G and the first adjacent wiring pattern ML1N included in the semiconductor device 202 illustrated in FIG. 8 may have the second separation interval ESL, and may be arranged apart from each other in a horizontal direction. The second separation interval ESL may be greater than the first separation interval SL.

Compared to the third wiring pattern ML3 included in the wiring structure MLS included in the semiconductor device 2 illustrated in FIG. 6, the third wiring pattern ML3a included in the wiring structure MLSa included in the semiconductor device 202 illustrated in FIG. 8 may further include the bridge wiring pattern ML3B. In FIG. 8, the bridge wiring pattern ML3B is illustrated as being included in the third wiring pattern ML3, but embodiments are not limited thereto. For example, the semiconductor device 202 illustrated in FIG. 8 may include the bridge wiring pattern ML2B as a semiconductor device 1b illustrated in FIG. 5B, or the bridge wiring pattern ML1B as a semiconductor device 1c illustrated in FIG. 5C, or the bridge wiring patterns ML1B, ML2B, and MLB3 as the semiconductor device 1d illustrated in FIG. 5D.

The semiconductor device 202 illustrated in FIG. 8 may include the semiconductor device manufactured (S130) using the semiconductor device layout S120 designed based on the updated DRM S20 described with reference to FIGS. 1A through 1D. In the updated DRM S20, a design rule may be recorded, in which the first adjacent wiring pattern ML1N, which is adjacent to the gate wiring pattern ML1G but is electrically floated from the substrate 110 before the fifth wiring pattern ML5 is formed, has a minimum separation interval greater than the minimum separation interval between the other first wiring patterns ML1, and a design rule may be recorded, in which, when there is the target wiring pattern ML4L having a relatively large area AR4L, the bridge wiring patterns ML1B, ML2B, and ML3B are formed.

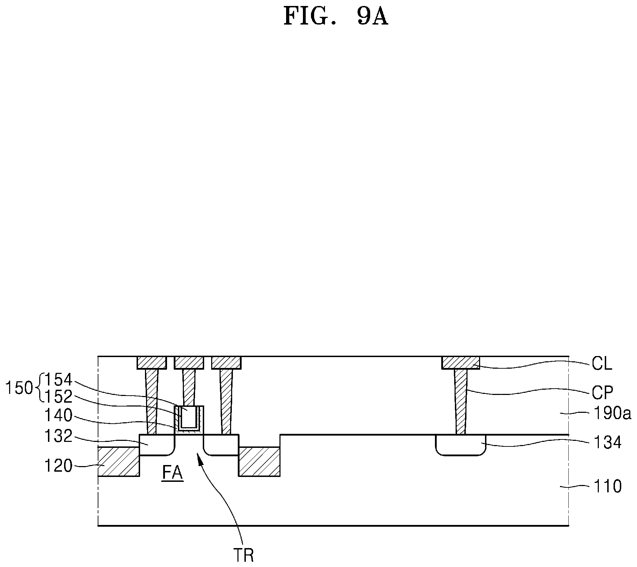

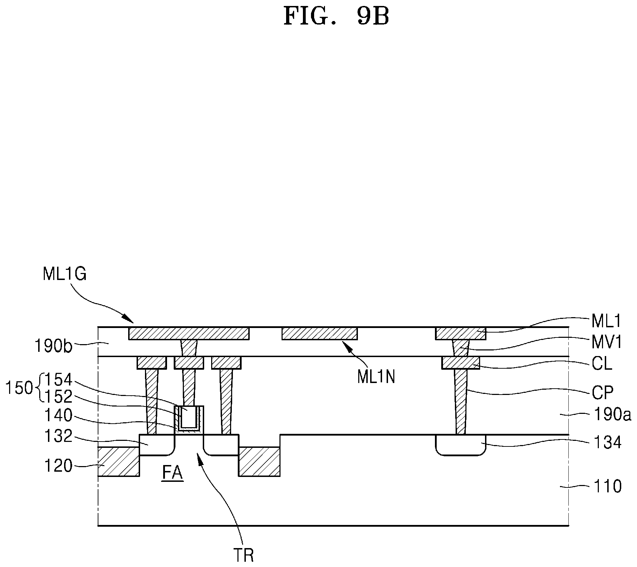

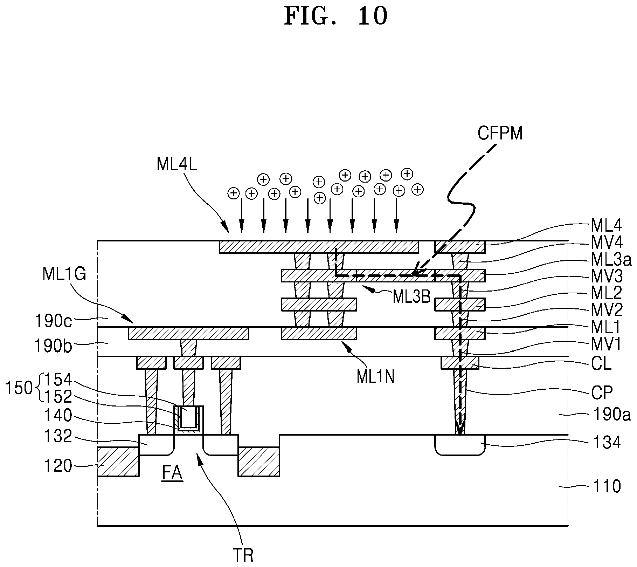

FIGS. 9A through 9C and 10 are cross-sectional views of a manufacturing method of a semiconductor device, according to embodiments. FIGS. 9A through 9C and 10 are cross-sectional views for describing a process of manufacturing the semiconductor device 100a illustrated in FIG. 5A using the updated DRM S20 after the failure evaluation of the semiconductor device 1 illustrated in FIGS. 4A and 4B is performed (S160), with reference to FIGS. 1 through 3.

Referring to FIGS. 1A through 5A and 9A together, after a substrate trench is formed in the substrate 110, the device isolation layer 120 filling at least a portion of the substrate trench may be formed. A portion of the substrate 110 defined by the device isolation layer 120 may include an active region FA. In some embodiments, the active region FA may be formed as a fin-type active region, in which an upper portion thereof protrudes in a fin shape over the device isolation layer 120.

The first impurity region 132 and the second impurity region 134 may be formed on a portion of the upper side of the substrate 110. For example, the first impurity region 132 may be formed by injecting impurities into portions of the active region FA. The second impurity region 134 may be formed by injecting impurities into a portion of the substrate 110. The first impurity region 132 may be formed in pairs on portions of the active regions FA arranged apart from each other.

The gate electrode 150 may be formed on the active region FA. The gate dielectric layer 140 may be formed to be arranged between the active region FA and the gate electrode 150. For example, the gate dielectric layer 140 and the gate electrode 150 may be sequentially formed on the active region FA.

On the substrate 110, the pair of first impurity regions 132, the second impurity region 134, the contact plugs CP connected to the gate electrode 150, and the connection conductive lines CL connected to the contact plugs CP may be formed. The connection conductive lines CL may be formed to be electrically connected to the pair of first impurity regions 132, the second impurity region 134, and the gate electrode 150 via the contact plugs CP.

On the substrate 110, the gate electrode 150, the connection conductive lines CL, and a first preliminary inter-wiring insulating layer 190a surrounding the contact plugs CP may be formed. The first preliminary inter-wiring insulating layer 190a may include a lower portion of the inter-wiring insulating layer 190 illustrated in FIG. 4A. For example, the first preliminary inter-wiring insulating layer 190a may include a portion of the inter-wiring insulating layer 190 illustrated in FIG. 4A, which surrounds the gate electrode 150, the connection conductive lines CL, and the contact plugs CP.

Referring to FIGS. 1A through 5A and 9B together, a plurality of first wiring vias MV1 and a plurality of first wiring patterns ML1 may be formed on the connection conductive lines CL. At least some of the plurality of first wiring patterns ML1 may be connected to at least one of the plurality of first wiring vias MV1 thereunder.

At least one of the plurality of first wiring patterns ML1 may be the gate wiring pattern ML1G electrically connected to the gate electrode 150 via at least one of the first wiring vias MV1. At least one of the plurality of first wiring patterns ML1 may be adjacent to the gate wiring pattern ML1G, and may include the first adjacent wiring pattern ML1N electrically floated from the substrate 110.

On the first preliminary inter-wiring insulating layer 190a, a second preliminary inter-wiring insulating layer 190b surrounding the plurality of first wiring vias MV1 and the plurality of first wiring patterns ML1 may be formed. The second preliminary inter-wiring insulating layer 190b may include a portion of the inter-wiring insulating layer 190 illustrated in FIG. 4A. For example, the second preliminary inter-wiring insulating layer 190b may include a portion of the inter-wiring insulating layer 190 illustrated in FIG. 4A surrounding the plurality of first wiring vias MV1 and the plurality of first wiring patterns ML1.

Referring to FIGS. 1A through 5A and 9C together, a plurality of wiring vias and a plurality of wiring patterns may be formed on a plurality of second wiring patterns ML2. For example, on the plurality of second wiring patterns ML2, a plurality of second wiring vias MV2, the plurality of second wiring patterns ML2, a plurality of third wiring vias MV3, a plurality of third wiring patterns ML3, a plurality of fourth wiring vias MV4, and a plurality of fourth wiring patterns ML4 may be formed sequentially.

On the second preliminary inter-wiring insulating layer 190b, a third preliminary inter-wiring insulating layer 190c surrounding the plurality of second wiring vias MV2, the plurality of second wiring patterns ML2, the plurality of third wiring vias MV3, the plurality of third wiring patterns ML3, the plurality of fourth wiring vias MV4, and the plurality of fourth wiring patterns ML4 may be formed. The first preliminary inter-wiring insulating layer 190a may include a portion of the inter-wiring insulating layer 190 illustrated in FIG. 4A. For example, the third preliminary inter-wiring insulating layer 190c may include a portion of the inter-wiring insulating layer 190 illustrated in FIG. 4A surrounding the plurality of second wiring vias MV2, the plurality of second wiring patterns ML2, the plurality of third wiring vias MV3, the plurality of third wiring patterns ML3, the plurality of fourth wiring vias MV4, and the plurality of fourth wiring patterns ML4.

At least one of the plurality of wiring patterns, for example, at least one of the plurality of fourth wiring patterns ML4, may be a target wiring pattern ML4L that is electrically floated from the substrate 110 and has a relatively large area. The target wiring pattern ML4L may have the area (AR4L in FIG. 4B) that is relatively larger than areas of object wiring patterns at an identical vertical level thereto, for example, the fourth wiring patterns ML4.

During the process of forming the third preliminary inter-wiring insulating layer 190c, charges may be charged in the target wiring pattern ML4L. For example, the target wiring pattern ML4L may be charged by plasma used in the process of forming the third preliminary inter-wiring insulating layer 190c. The first adjacent wiring pattern ML1N and the target wiring pattern ML4L electrically connected to the first adjacent wiring pattern ML1N may be floated from the substrate 110. Accordingly, in the process of forming the third preliminary inter-wiring insulating layer 190c, charges charged in the target wiring pattern ML4L may move to the first adjacent wiring pattern ML1N and also charge the first adjacent wiring pattern ML1N. When a separation interval between the first adjacent wiring pattern ML1N and the gate wiring pattern ML1G is not sufficiently large, the charges charged in the first adjacent wiring pattern ML1N may cause a coupling effect in the gate wiring pattern ML1G, and a charge flow path CFP may be generated from the target wiring pattern ML4L to the gate electrode 150, the gate dielectric layer 140, or a channel region, that is, the active region FA. In this case, a break in the gate dielectric layer 140, a burn in the channel region, that is, an active region FA, or a burn in the gate electrode 150 may occur, and failures may occur in the semiconductor device 1 illustrated in FIGS. 4A and 4B.

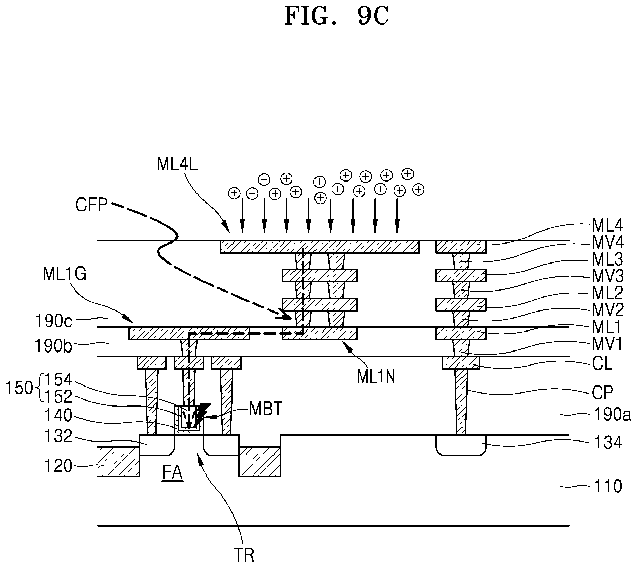

Referring to FIGS. 1A through 5A and 10 together, instead of the third wiring pattern ML3 illustrated in FIG. 9C, the third wiring pattern ML3a including the bridge wiring pattern ML3B may be formed like the semiconductor device 100a illustrated in FIG. 5A.

In the process of forming the third preliminary inter-wiring insulating layer 190c, when the target wiring pattern ML4L is charged with charges, a modified charge flow path CFPM, in which the charges charged via the bridge wiring pattern ML3B move to the substrate 110, may be formed. In this case, because the charges charged in the target wiring pattern ML4L is not transferred to the gate electrode 150, the gate dielectric layer 140, or a channel region, that is, the active region FA, a break in the gate dielectric layer 140, a burn in the channel region, that is, the active region FA, or a burn in the gate electrode 150 may not occur, and failures in the semiconductor device 100a illustrated in FIG. 5A may not occur.

FIGS. 9A through 9C may illustrate a process of manufacturing a semiconductor device (S130) using the semiconductor device layout S120 designed based on the DRM S20 described with reference to FIGS. 1A through 1D, or a process of manufacturing a semiconductor device using a simulation (S150) using the designed semiconductor device layout S120. FIG. 10 may include a process of manufacturing a semiconductor device (S130) using the semiconductor device layout S120 designed based on the updated DRM S20 described with reference to FIGS. 1A through 1D.

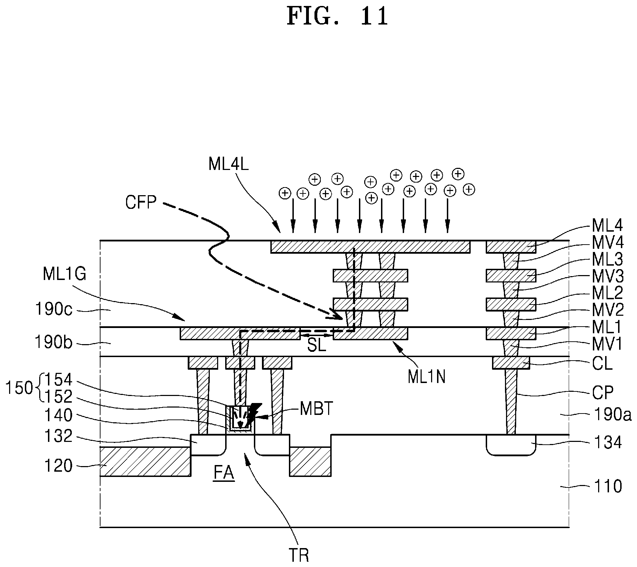

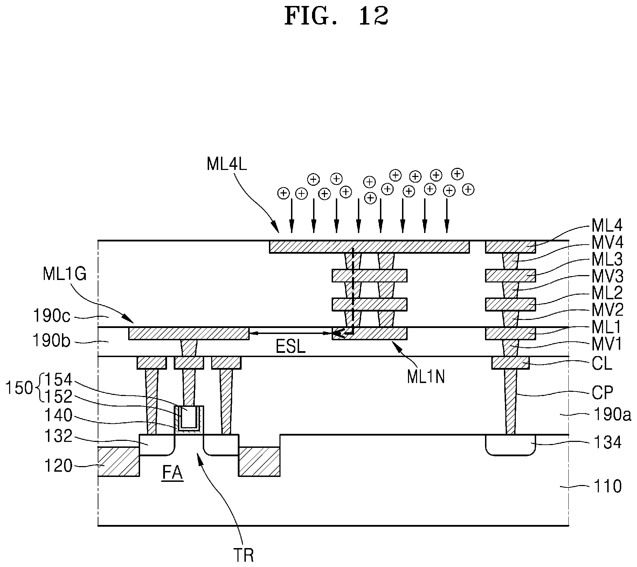

FIGS. 11 and 12 are cross-sectional views of a manufacturing method of semiconductor devices, and cross-sectional views of semiconductor devices, according to embodiments. FIGS. 11 and 12 are cross-sectional views describing, with reference to FIGS. 1A through 3 and 6 and 7 together, a process of manufacturing the semiconductor device 200 illustrated in FIG. 7 using the updated DRM S20 after the failure evaluation is performed (S160) on the semiconductor device 2 illustrated in FIG. 6.

Referring to FIG. 11, after the substrate trench is formed in the substrate 110, the device isolation layer 120 defining the active region FA while filling at least a portion of the substrate trench is formed, and the first impurity region 132 and the second impurity region 134 may be formed in a portion in the upper side of the substrate 110. The gate dielectric layer 140 and the gate electrode 150 may be sequentially formed on the active region FA.

On the substrate 110, the contact plugs CP connected to the pair of first impurity regions 132, the second impurity region 134, and the gate electrode 150, the connection conductive lines CL connected to the contact plugs CP, and the first preliminary inter-wiring insulating layer 190a surrounding the gate electrode 150, the connection conductive lines CL, and the contact plugs CP, may be formed.

On the connection conductive lines CL and the first preliminary inter-wiring insulating layer 190a, the plurality of first wiring vias MV1, the plurality of first wiring patterns ML1, and the second preliminary inter-wiring insulating layer 190b surrounding the plurality of first wiring vias MV1 and the plurality of first wiring patterns ML1 may be formed. At least one of the plurality of first wiring patterns ML1 may be the gate wiring pattern ML1G electrically connected to the gate electrode 150 via at least one of the first wiring vias MV1. At least one of the plurality of first wiring patterns ML1 may be adjacent to the gate wiring pattern ML1G with a first separation interval SL therebetween, and may include the first adjacent wiring pattern ML1N electrically floating from the substrate 110.

On the plurality of second wiring patterns ML2 and the second preliminary inter-wiring insulating layer 190b, the plurality of second wiring vias MV2, the plurality of second wiring patterns ML2, the plurality of third wiring vias MV3, the plurality of third wiring patterns ML3, the plurality of fourth wiring vias MV4, the plurality of fourth wiring patterns ML4, and the third preliminary inter-wiring insulating layer 190c surrounding the plurality of second wiring vias MV2, the plurality of second wiring patterns ML2, the plurality of third wiring vias MV3, the plurality of third wiring patterns ML3, the plurality of fourth wiring vias MV4, and the plurality of fourth wiring patterns ML4 may be formed. At least one of the plurality of fourth wiring patterns ML4 may include the target wiring pattern ML4L electrically floated from the substrate 110 and having a relatively large area.

During the process of forming the third preliminary inter-wiring insulating layer 190c, charges may be charged in the target wiring pattern ML4L. For example, the target wiring pattern ML4L may be charged by plasma used in the process of forming the third preliminary inter-wiring insulating layer 190c. The first adjacent wiring pattern ML1N and the target wiring pattern ML4L electrically connected to the first adjacent wiring pattern ML1N may be floated from the substrate 110. Accordingly, in the process of forming the third preliminary inter-wiring insulating layer 190c, charges charged in the target wiring pattern ML4L may move to the first adjacent wiring pattern ML1N and also charge the first adjacent wiring pattern ML1N. When a separation interval between the first adjacent wiring pattern ML1N and the gate wiring pattern ML1G has the first separation interval SL, which is relatively small, charges charged in the first adjacent wiring pattern ML1N may cause a coupling effect in the gate wiring pattern ML1G, and the charge flow path CFP from the target wiring pattern ML4L to the gate electrode 150, the gate dielectric layer 140, or the channel region, that is, the active region FA, may be generated. In this case, a break in the gate dielectric layer 140, a burn in the channel region, that is, an active region FA, or a burn in the gate electrode 150 may occur, and failures may occur in the semiconductor device 2 illustrated in FIG. 6.

Referring to FIG. 12, the gate wiring pattern ML1G and the first adjacent wiring pattern ML1N may be formed to have a second separation interval ESL greater than the first separation interval SL illustrated in FIG. 11.

In the process of forming the third preliminary inter-wiring insulating layer 190c, even though charges are charged in the target wiring pattern ML4L, the gate wiring pattern ML1G and the first adjacent wiring pattern ML1N are arranged apart from each other with the second separation interval ESL, which is sufficiently large, therebetween, a coupling effect may not occur in the gate wiring pattern ML1G even when charges charged in the target wiring pattern ML4L moves to the first adjacent wiring pattern ML1N. In this case, because the charges charged in the target wiring pattern ML4L are not transferred to the gate electrode 150, the gate dielectric layer 140, or a channel region, that is, the active region FA, a break in the gate dielectric layer 140, a burn in the channel region, that is, the active region FA, or a burn in the gate electrode 150 may not occur, and failures in the semiconductor device 200 illustrated in FIG. 7 may not occur.

FIG. 11 may illustrate a process of manufacturing a semiconductor device (S130) using the semiconductor device layout S120 designed based on the DRM S20 described with reference to FIGS. 1A through 1D, or a process of manufacturing a semiconductor device using a simulation (S150) using the designed semiconductor device layout S120. FIG. 12 may include a process of manufacturing a semiconductor device (S130) using the semiconductor device layout S120 designed based on the updated DRM S20 described with reference to FIGS. 1A through 1D.

Referring to FIGS. 1A through 12, the manufacturing method of a semiconductor device according to embodiments includes redesigning or correcting the semiconductor device layout (S110) based on the updated DRM S20 by storing, in the DRM S20, the design rule updated by changing or adding the design rule applied to a periphery of a location where failures have occurred, manufacturing the semiconductor device (S130), and shipping out the product (S300). Therefore, it is possible to manufacture a semiconductor device while preventing or reducing the occurrence of failures.

## Claims

1. A method of manufacturing a semiconductor device, comprising:
designing (S110) a semiconductor device layout using a design rule manual in which a plurality of design rules are recorded, the semiconductor device layout comprises:
a gate electrode (150);
a gate electrode dielectric layer (140) arranged between an active region (FA) of the semiconductor device and the gate electrode (150); and
a plurality of wiring patterns including:
a gate wiring pattern (ML1G) electrically connected to the gate electrode (150);
a first adjacent wiring pattern (ML1N) adjacent to the gate wiring pattern (ML1G); and
a target wiring pattern (ML4L) electrically connected to the first adjacent wiring pattern (ML1N); performing (S160) a failure evaluation for the semiconductor to identify whether a failure has occurred for the semiconductor device provided according to the semiconductor device layout, the failure includes at least one gate structure failure of the semiconductor device manufactured using the designed semiconductor device layout;
updating (S170) the design rule manual by updating the plurality of design rules recorded in the design rule manual, based on a result of the failure evaluation, wherein updating (S170) the design rule manual comprises when an area of the target wiring pattern (ML4L) is greater than a threshold maximum area at least one of:
changing a design rule among the plurality of design rules such that a separation interval between the gate wiring pattern (ML1G) and the first adjacent wiring pattern (ML1N) is changed from a first separation interval to a second separation interval that is greater than the first separation interval; and/or
changing a design rule among the plurality of design rules such that a bridge wiring pattern (ML1B; ML2B; ML3B) connected between wiring patterns at a lower vertical level to the target wiring pattern (ML4L) is added to electrically connect the target wiring pattern (ML4L) to a substrate (110) of the semiconductor device;
redesigning (S110a) the semiconductor device layout using the updated design rule manual;
manufacturing (S130a) the semiconductor device using the redesigned semiconductor device layout; and
storing the changed design rule in the design rule manual.

2. The method of claim 1, wherein manufacturing (S130a) the semiconductor device comprises manufacturing (S130a) the semiconductor device as comprising:
a pair of first impurity regions (132) and a second impurity region (134) arranged apart from each other on a portion of an upper side of the substrate (110);
a wiring structure (MLS) including the plurality of wiring patterns and a plurality of wiring vias,
wherein the gate electrode (150) is arranged on the active region (FA) between the pair of first impurity regions (132),
wherein the gate dielectric layer (140) is arranged between the active region (FA) and the gate electrode (150),
wherein the gate structure failure comprises a break of the gate dielectric layer (140), a burn of the active region (FA), or a burn of the gate electrode (150).

3. The method of claim 2, wherein the plurality of wiring patterns comprise:
a plurality of first wiring patterns (ML1) arranged at a first vertical level, a plurality of second wiring patterns (ML2) arranged at a second vertical level that is higher than the first vertical level, a plurality of third wiring patterns (ML3) arranged at a third vertical level that is higher than the second vertical level, and a plurality of fourth wiring patterns (ML4) arranged at a fourth vertical level that is higher than the third vertical level,
wherein the plurality of first wiring patterns (MV1) comprise the gate wiring pattern (ML1G) electrically connected to the gate electrode (150), the first adjacent wiring pattern adjacent to the gate wiring pattern (ML1G), and a first connection wiring pattern arranged between the plurality of fourth wiring patterns (MV4) and the second impurity region (134) and configured to electrically connect the plurality of fourth wiring patterns (ML4) to the second impurity region (134),
wherein the plurality of second wiring patterns (ML2) comprise a second adjacent wiring pattern (ML2N) arranged between the first adjacent wiring pattern (ML1N) and the plurality of fourth wiring patterns (ML4) and configured to electrically connect the plurality of fourth wiring patterns (ML4) to the first adjacent wiring pattern (ML1N), and a second connection wiring pattern arranged between the plurality of fourth wiring patterns (MV4) and the second impurity region (134) and configured to electrically connect the plurality of fourth wiring patterns (MV4) to the second impurity region (134), and
wherein the plurality of third wiring patterns (ML3) comprise the target wiring pattern (ML4L) arranged between the first adjacent wiring pattern (ML1N) and the plurality of fourth wiring patterns (ML4) and configured to electrically connect the plurality of fourth wiring patterns (ML4L) to the first adjacent wiring pattern (ML1N), and a third connection wiring pattern arranged between the plurality of fourth wiring patterns (MV4) and the second impurity region (134) and configured to electrically connect the plurality of fourth wiring patterns (MV4) to the second impurity region (134).

4. The method of claim 3, wherein updating (S170) the design rule manual comprises:
when the area of the target wiring pattern (ML4L) is greater than the threshold maximum area, changing a design rule among the plurality of design rules such that at least one of a first bridge wiring pattern (ML1B) configured to connect the first adjacent wiring pattern (ML1N) to the first connection wiring pattern and a second bridge wiring pattern (ML2B) configured to connect the second adjacent wiring pattern (ML2N) to the second connection wiring pattern is added; and
storing the changed design rule in the design rule manual.

5. The method of claim 4, wherein the area of the target wiring pattern is about equal to a total area of the third wiring patterns (ML3) connected to each other at an identical vertical level among the plurality of third wiring patterns (ML3).

6. The method of any of claims 3 to 5, further comprising:
manufacturing (S 130a) the semiconductor device by performing a simulation using the designed semiconductor device layout; and
performing a failure evaluation of a break of the gate dielectric layer (140), a burn of the active region (FA), or a burn of the gate electrode (150), which are included in the semiconductor device manufactured using the simulation.

7. The method of claim 6, wherein the first separation interval is an interval between the gate wiring pattern (ML1G) included in the semiconductor device manufactured using the simulation and the first adjacent wiring pattern (ML1N).

8. The method of any preceding claim, wherein the method comprises:
manufacturing (S130) the semiconductor device by performing wafer processing using the redesigned semiconductor device layout;
performing (S140) a test of inspecting electrical characteristics of the manufactured semiconductor device; and
performing (S160) the failure evaluation of the manufactured semiconductor device has occurred using a result of the test.

9. The method of any of claims 1 to 7, comprising:
manufacturing (S130) the semiconductor device by performing a wafer processing using the designed semiconductor device layout;
performing (S140) a test of inspecting electrical characteristics of the manufactured semiconductor device; and
performing (S160) a failure evaluation of a break of the gate dielectric layer, a burn of an active region, or a burn of the gate electrode, which are included in the semiconductor device, based on a result of the test of the manufactured semiconductor device.

10. The method of any preceding claim, wherein performing the failure evaluation comprises:
performing (S150) a simulation of manufacturing the semiconductor device using the redesigned semiconductor device layout; and
performing (S160) the failure evaluation of the semiconductor device manufactured using the simulation.

11. The method of claim 10, wherein manufacturing the semiconductor device comprises manufacturing the semiconductor device as comprising:
the substrate (110) including the active region (FA) defined by a device isolation layer (120);
a pair of first impurity regions (132) and a second impurity region (134) arranged apart from each other on a portion of an upper side of the substrate (110);
the gate electrode (150) arranged on the active region (FA) between the pair of first impurity regions (132);
the gate dielectric layer (140) arranged between the active region (FA) and the gate electrode (150); and
a wiring structure (MLS) including he plurality of wiring patterns and a plurality of wiring vias,
wherein the plurality of wiring patterns comprise:
a plurality of first wiring patterns (ML1), arranged above the gate electrode (150), including a gate wiring pattern electrically connected to the gate electrode (150), a first adjacent wiring pattern (ML1N) adjacent to the gate wiring pattern (ML1G), and a plurality of first connection wiring patterns, above the second impurity region (134), wherein one first impurity region of the pair of first impurity regions (132) is electrically connected to the second impurity region (134);
a plurality of second wiring patterns (ML2) arranged on a higher vertical level than the plurality of first wiring patterns (ML1), and including a second adj acent wiring pattern (ML2N) electrically connected to the first adjacent wiring pattern (ML1N) above the first adjacent wiring pattern (ML1N), and a second connection wiring pattern, above the first connection wiring pattern, electrically connected to the first connection wiring pattern;
a plurality of third wiring patterns (ML3) arranged on a higher vertical level than the plurality of second wiring patterns (ML2), and including the target wiring pattern (ML4L), above the second adjacent wiring pattern (ML2N), electrically connected to the second adjacent wiring pattern (ML2N), and a third connection wiring pattern, above the second connection wiring pattern, electrically connected to the second connection wiring pattern; and
a plurality of fourth wiring patterns (ML4) arranged at a higher vertical level than the plurality of third wiring patterns (ML3), and electrically connected to the target wiring pattern (ML4L) and the third connection wiring pattern above the target wiring pattern (ML4L) and the third connection wiring pattern.

12. The method of claim 11, wherein designing the semiconductor device layout comprises designing the semiconductor device layout such that the separation interval between the gate wiring pattern and the first adjacent wiring pattern is set to the first separation interval,
wherein updating the design rule manual comprises, when the area of the target wiring pattern is greater than a threshold maximum area, changing the design rule among the plurality of design rules such that the separation interval between the gate wiring pattern and the first adjacent wiring pattern is set to the second separation interval that is greater than the first separation interval, and storing the changed design rule in the design rule manual, and
wherein manufacturing the semiconductor device comprises manufacturing the semiconductor device by setting the separation interval between the gate wiring pattern and the first adjacent wiring pattern to the second separation interval.

13. The method of claim 12, wherein designing the semiconductor device layout comprises designing the semiconductor device layout such that, the first adjacent wiring pattern (ML1N) and the first connection wiring pattern are arranged apart from each other at an identical vertical level, the second adjacent wiring pattern (ML2N) and the second connection wiring pattern are arranged apart from each other at an identical vertical level, and the target wiring pattern (ML4L) and the third connection wiring pattern are arranged apart from each other at an identical vertical level,
wherein updating the design rule manual comprises, when the area of the target wiring pattern (ML4L) is greater than the threshold maximum area, changing the design rule such that at least one of a first bridge wiring pattern (ML1B) configured to connect the first adjacent wiring pattern (ML1N) to the first connection wiring pattern and a second bridge wiring pattern (ML1B) configured to connect the second adjacent wiring pattern (ML2N) to the second connection wiring pattern is added at corresponding vertical levels, and storing the changed design rule in the design rule manual, and
wherein manufacturing of the semiconductor device comprises manufacturing the semiconductor device such that at least one of the first bridge wiring pattern (ML1B) and the second bridge wiring pattern (ML2B) is included in the semiconductor device.

## Patentansprüche

1. Verfahren zum Herstellen einer Halbleitervorrichtung, umfassend:
Entwerfen (S110) einer Halbleitervorrichtungsanordnung unter Verwendung eines Entwurfsregelhandbuchs, in dem eine Vielzahl von Entwurfsregeln aufgezeichnet ist, wobei die Halbleitervorrichtungsanordnung umfasst:
eine Gate-Elektrode (150);
eine Gate-Elektroden-Dielektrikumsschicht (140), die zwischen einer aktiven Region (FA) der Halbleitervorrichtung und der Gate-Elektrode (150) angeordnet ist; und
eine Vielzahl von Verdrahtungsmustern, enthaltend:
ein Gate-Verdrahtungsmuster (ML1G), das mit der Gate-Elektrode (150) elektrisch verbunden ist;
ein erstes angrenzendes Verdrahtungsmuster (ML1N), das an das Gate-Verdrahtungsmuster (ML1G) angrenzt; und
ein Ziel-Verdrahtungsmuster (ML4L), das mit dem ersten angrenzenden Verdrahtungsmuster (ML1N) elektrisch verbunden ist; Durchführen (S160) einer Fehlerbewertung für den Halbleiter, um zu identifizieren, ob ein Fehler für die gemäß der Halbleitervorrichtungsanordnung bereitgestellte Halbleitervorrichtung vorgekommen ist, wobei der Fehler mindestens einen Gatestruktur-Fehler der unter Verwendung der entworfenen Halbleitervorrichtungsanordnung hergestellten Halbleitervorrichtung enthält;
Aktualisieren (S170) des Entwurfsregelhandbuchs durch Aktualisieren der in dem Entwurfsregelhandbuch aufgezeichneten Vielzahl von Entwurfsregeln basierend auf einem Ergebnis der Fehlerbewertung, wobei das Aktualisieren (S170) des Entwurfsregelhandbuchs, wenn eine Fläche des Ziel-Verdrahtungsmusters (ML4L) größer als eine maximale Schwellenwertfläche ist, mindestens eines von Folgendem umfasst:
Ändern einer Entwurfsregel aus der Vielzahl von Entwurfsregeln derart, dass ein Trennintervall zwischen dem Gate-Verdrahtungsmuster (ML1G) und dem ersten angrenzenden Verdrahtungsmuster (ML1N) von einem ersten Trennintervall zu einem zweiten Trennintervall, das größer als das erste Trennintervall ist, geändert wird; und/oder
Ändern einer Entwurfsregel aus der Vielzahl von Entwurfsregeln derart, dass ein Brückenverdrahtungsmuster (ML1B; ML2B; ML3B), das zwischen Verdrahtungsmustern auf einer niedrigeren vertikalen Ebene mit dem Ziel-Verdrahtungsmuster (ML4L) verbunden ist, hinzugefügt wird, um das Ziel-Verdrahtungsmuster (ML4L) mit einem Substrat (110) der Halbleitervorrichtung elektrisch zu verbinden;
Neuentwerfen (S110a) der Halbleitervorrichtungsanordnung unter Verwendung des aktualisierten Entwurfsregelhandbuchs;
Herstellen (S130a) der Halbleitervorrichtung unter Verwendung der neuentworfenen Halbleitervorrichtungsanordnung; und
Speichern der geänderten Entwurfsregel in dem Entwurfsregelhandbuch.

2. Verfahren nach Anspruch 1, wobei das Herstellen (S130a) der Halbleitervorrichtung das Herstellen (S130a) der Halbleitervorrichtung als Folgendes umfassend umfasst:
ein Paar von ersten Verunreinigungsregionen (132) und eine zweite Verunreinigungsregion (134), die getrennt voneinander auf einem Abschnitt einer oberen Seite des Substrats (110) angeordnet sind;
eine Verdrahtungsstruktur (MLS), die die Vielzahl von Verdrahtungsmustern und eine Vielzahl von Verdrahtungsdurchkontaktierungen enthält,
wobei die Gate-Elektrode (150) auf der aktiven Region (FA) zwischen dem Paar von ersten Verunreinigungsregionen (132) angeordnet ist,
wobei die Gate-Dielektrikumsschicht (140) zwischen der aktiven Region (FA) und der Gate-Elektrode (150) angeordnet ist,
wobei der Gatestruktur-Fehler einen Bruch der Gate-Dielektrikumsschicht (140), eine Verbrennung der aktiven Region (FA) oder eine Verbrennung der Gate-Elektrode (150) umfasst.

3. Verfahren nach Anspruch 2, wobei die Vielzahl von Verdrahtungsmustern umfasst:
eine Vielzahl von ersten Verdrahtungsmustern (ML1), die auf einer ersten vertikalen Ebene angeordnet ist, eine Vielzahl von zweiten Verdrahtungsmustern (ML2), die auf einer zweiten vertikalen Ebene, die höher als die erste vertikale Ebene ist, angeordnet ist, eine Vielzahl von dritten Verdrahtungsmustern (ML3), die auf einer dritten vertikalen Ebene, die höher als die zweite vertikale Ebene ist, angeordnet ist, und eine Vielzahl von vierten Verdrahtungsmustern (ML4), die auf einer vierten vertikalen Ebene, die höher als die dritte vertikale Ebene ist, angeordnet ist,
wobei die Vielzahl von ersten Verdrahtungsmustern (MV1) das Gate-Verdrahtungsmuster (ML1G), das mit der Gate-Elektrode (150) elektrisch verbunden ist, das erste angrenzende Verdrahtungsmuster, das an das Gate-Verdrahtungsmuster (ML1G) angrenzt, und ein erstes Verbindungsverdrahtungsmuster, das zwischen der Vielzahl von vierten Verdrahtungsmustern (MV4) und der zweiten Verunreinigungsregion (134) angeordnet ist und konfiguriert ist, die Vielzahl von vierten Verdrahtungsmustern (ML4) mit der zweiten Verunreinigungsregion (134) elektrisch zu verbinden, umfasst,
wobei die Vielzahl von zweiten Verdrahtungsmustern (ML2) ein zweites angrenzendes Verdrahtungsmuster (ML2N), das zwischen dem ersten angrenzenden Verdrahtungsmuster (ML1N) und der Vielzahl von vierten Verdrahtungsmustern (ML4) angeordnet ist und konfiguriert ist, die Vielzahl von vierten Verdrahtungsmustern (ML4) mit dem ersten angrenzenden Verdrahtungsmuster (MLN) elektrisch zu verbinden, und ein zweites Verbindungsverdrahtungsmuster, das zwischen der Vielzahl von vierten Verdrahtungsmustern (MV4) und der zweiten Verunreinigungsregion (134) angeordnet ist und konfiguriert ist, die Vielzahl von vierten Verdrahtungsmustern (MV4) mit der zweiten Verunreinigungsregion (134) elektrisch zu verbinden, umfasst und
wobei die Vielzahl von dritten Verdrahtungsmustern (ML3) das Ziel-Verdrahtungsmuster (ML4L), das zwischen dem ersten angrenzenden Verdrahtungsmuster (ML1N) und der Vielzahl von vierten Verdrahtungsmustern (ML4) angeordnet ist und konfiguriert ist, die Vielzahl von vierten Verdrahtungsmustern (ML4L) mit dem ersten angrenzenden Verdrahtungsmuster (ML1N) elektrisch zu verbinden, und ein drittes Verbindungsverdrahtungsmuster, das zwischen der Vielzahl von vierten Verdrahtungsmustern (MV4) und der zweiten Verunreinigungsregion (134) angeordnet ist und konfiguriert ist, die Vielzahl von vierten Verdrahtungsmustern (MV4) mit der zweiten Verunreinigungsregion (134) elektrisch zu verbinden, umfasst.

4. Verfahren nach Anspruch 3, wobei das Aktualisieren (S170) des Entwurfsregelhandbuchs umfasst:
wenn die Fläche des Ziel-Verdrahtungsmusters (ML4L) größer als die maximale Schwellenwertfläche ist, Ändern einer Entwurfsregel aus der Vielzahl von Entwurfsregeln derart, dass mindestens eines eines ersten Brückenverdrahtungsmusters (ML1B), das konfiguriert ist, das erste angrenzende Verdrahtungsmuster (ML1N) mit dem ersten Verbindungsverdrahtungsmuster zu verbinden, und eines zweiten Brückenverdrahtungsmusters (ML2B), das konfiguriert ist, das zweite angrenzende Verdrahtungsmuster (ML2N) mit dem zweiten Verbindungsverdrahtungsmuster zu verbinden, hinzugefügt wird; und
Speichern der geänderten Entwurfsregel in dem Entwurfsregelhandbuch.

5. Verfahren nach Anspruch 4, wobei die Fläche des Ziel-Verdrahtungsmusters etwa gleich einer gesamten Fläche der dritten Verdrahtungsmuster (ML3), die miteinander auf einer identischen vertikalen Ebene aus der Vielzahl von dritten Verdrahtungsmustern (ML3) verbunden sind, ist.

6. Verfahren nach einem der Ansprüche 3 bis 5, ferner umfassend:
Herstellen (S130a) der Halbleitervorrichtung durch Durchführen einer Simulation unter Verwendung der entworfenen Halbleitervorrichtungsanordnung; und
Durchführen einer Fehlerbewertung eines Bruchs der Gate-Dielektrikumsschicht (140), einer Verbrennung der aktiven Region (FA) oder einer Verbrennung der Gate-Elektrode (150), die in der unter Verwendung der Simulation hergestellten Halbleitervorrichtung enthalten sind.

7. Verfahren nach Anspruch 6, wobei das erste Trennintervall ein Intervall zwischen dem Gate-Verdrahtungsmuster (ML1G), das in der unter Verwendung der Simulation hergestellten Halbleitervorrichtung enthalten ist, und dem ersten angrenzenden Verdrahtungsmuster (ML1N) ist.

8. Verfahren nach einem der vorhergehenden Ansprüche, wobei das Verfahren umfasst:
Herstellen (S130) der Halbleitervorrichtung durch Durchführen von Waferbearbeitung unter Verwendung der neuentworfenen Halbleitervorrichtungsanordnung;
Durchführen (S140) eines Tests des Überprüfens der elektrischen Eigenschaften der hergestellten Halbleitervorrichtung; und
Durchführen (S160) der Fehlerbewertung der hergestellten Halbleitervorrichtung, die unter Verwendung eines Ergebnisses des Tests erfolgt ist.

9. Verfahren nach einem der Ansprüche 1 bis 7, umfassend:
Herstellen (S130) der Halbleitervorrichtung durch Durchführen einer Waferbearbeitung unter Verwendung der entworfenen Halbleitervorrichtungsanordnung;
Durchführen (S140) eines Tests des Überprüfens der elektrischen Eigenschaften der hergestellten Halbleitervorrichtung; und
Durchführen (S160) einer Fehlerbewertung eines Bruchs der Gate-Dielektrikumschicht, einer Verbrennung einer aktiven Region oder einer Verbrennung der Gate-Elektrode, die in der Halbleitervorrichtung enthalten sind, basierend auf einem Ergebnis des Tests der hergestellten Halbleitervorrichtung.

10. Verfahren nach einem der vorhergehenden Ansprüche, wobei das Durchführen der Fehlerbewertung umfasst:
Durchführen (S150) einer Simulation des Herstellens der Halbleitervorrichtung unter Verwendung der neuentworfenen Halbleitervorrichtungsanordnung; und
Durchführen (S160) der Fehlerbewertung der unter Verwendung der Simulation hergestellten Halbleitervorrichtung.

11. Verfahren nach Anspruch 10, wobei das Herstellen der Halbleitervorrichtung das Herstellen der Halbleitervorrichtung als Folgendes umfassend umfasst:
das Substrat (110), das die durch eine Vorrichtungsisolationsschicht (120) definierte aktive Region (FA) enthält;
ein Paar von ersten Verunreinigungsregionen (132) und eine zweite Verunreinigungsregion (134), die getrennt voneinander auf einem Abschnitt einer oberen Seite des Substrats (110) angeordnet sind;
die Gate-Elektrode (150), die auf der aktiven Region (FA) zwischen dem Paar von ersten Verunreinigungsregionen (132) angeordnet ist;
die Gate-Dielektrikumsschicht (140), die zwischen der aktiven Region (FA) und der Gate-Elektrode (150) angeordnet ist; und
eine Verdrahtungsstruktur (MLS), die die Vielzahl von Verdrahtungsmustern und eine Vielzahl von Verdrahtungsdurchkontaktierungen enthält,
wobei die Vielzahl von Verdrahtungsmustern umfasst:
eine Vielzahl von ersten Verdrahtungsmustern (ML1), die über der Gate-Elektrode (150) angeordnet ist, die ein Gate-Verdrahtungsmuster, das mit der Gate-Elektrode (150) elektrisch verbunden ist, ein erstes angrenzendes Verdrahtungsmuster (ML1N), das an das Gate-Verdrahtungsmuster (ML1G) angrenzt, und eine Vielzahl von ersten Verbindungsverdrahtungsmustern über der zweiten Verunreinigungsregion (134) enthält, wobei eine erste Verunreinigungsregion des Paars von ersten Verunreinigungsregionen (132) mit der zweiten Verunreinigungsregion (134) elektrisch verbunden ist;
eine Vielzahl von zweiten Verdrahtungsmustern (ML2), die auf einer höheren vertikalen Ebene als die Vielzahl von ersten Verdrahtungsmustern (ML1) angeordnet ist und die ein zweites angrenzendes Verdrahtungsmuster (ML2N), das mit dem ersten angrenzenden Verdrahtungsmuster (ML1N) über dem ersten angrenzenden Verdrahtungsmuster (ML1N) elektrisch verbunden ist, und ein zweites Verbindungsverdrahtungsmuster über dem ersten Verbindungsverdrahtungsmuster, das mit dem ersten Verbindungsverdrahtungsmuster elektrisch verbunden ist, enthält;
eine Vielzahl von dritten Verdrahtungsmustern (ML3), die auf einer höheren vertikalen Ebene als die Vielzahl von zweiten Verdrahtungsmustern (ML2) angeordnet ist und die das Ziel-Verdrahtungsmuster (ML4L) über dem zweiten angrenzenden Verdrahtungsmuster (ML2N), das mit dem zweiten angrenzenden Verdrahtungsmuster (ML2N) elektrisch verbunden ist, und ein drittes Verbindungsverdrahtungsmuster über dem zweiten Verbindungsverdrahtungsmuster, das mit dem zweiten Verbindungsverdrahtungsmuster elektrisch verbunden ist, enthält; und
eine Vielzahl von vierten Verdrahtungsmustern (ML4), die auf einer höheren vertikalen Ebene als die Vielzahl von dritten Verdrahtungsmustern (ML3) angeordnet ist und die mit dem Ziel-Verdrahtungsmuster (ML4L) und dem dritten Verbindungsverdrahtungsmuster über dem Ziel-Verdrahtungsmuster (ML4L) und dem dritten Verbindungsverdrahtungsmuster elektrisch verbunden ist.

12. Verfahren nach Anspruch 11, wobei das Entwerfen der Halbleitervorrichtungsanordnung das Entwerfen der Halbleitervorrichtungsanordnung derart, dass das Trennintervall zwischen dem Gate-Verdrahtungsmuster und dem ersten angrenzenden Verdrahtungsmuster auf das erste Trennintervall eingestellt ist, umfasst,
wobei das Aktualisieren des Entwurfsregelhandbuchs, wenn die Fläche des Ziel-Verdrahtungsmusters größer als eine maximale Schwellenwertfläche ist, das Ändern der Entwurfsregel aus der Vielzahl von Entwurfsregeln derart, dass das Trennintervall zwischen dem Gate-Verdrahtungsmuster und dem ersten angrenzenden Verdrahtungsmuster auf das zweite Trennintervall, das größer als das erste Trennintervall ist, eingestellt ist, und Speichern der geänderten Entwurfsregel in dem Entwurfsregelhandbuch umfasst, und
wobei das Herstellen der Halbleitervorrichtung das Herstellen der Halbleitervorrichtung durch Einstellen des Trennintervalls zwischen dem Gate-Verdrahtungsmuster und dem ersten angrenzenden Verdrahtungsmuster auf das zweite Trennintervall umfasst.

13. Verfahren nach Anspruch 12, wobei das Entwerfen der Halbleitervorrichtungsanordnung das Entwerfen der Halbleitervorrichtungsanordnung derart, dass das erste angrenzende Verdrahtungsmuster (ML1N) und das erste Verbindungsverdrahtungsmuster getrennt voneinander auf einer identischen vertikalen Ebene angeordnet sind, das zweite angrenzende Verdrahtungsmuster (ML2N) und das zweite Verbindungsverdrahtungsmuster getrennt voneinander auf einer identischen vertikalen Ebene angeordnet sind und das Ziel-Verdrahtungsmuster (ML4L) und das dritte Verbindungsverdrahtungsmuster getrennt voneinander auf einer identischen vertikalen Ebene angeordnet sind, umfasst,
wobei das Aktualisieren des Entwurfsregelhandbuchs, wenn die Fläche des Ziel-Verdrahtungsmusters (ML4L) größer als die maximale Schwellenwertfläche ist, das Ändern der Entwurfsregel derart, dass mindestens eines eines ersten Brückenverdrahtungsmusters (ML1B), das konfiguriert ist, das erste angrenzende Verdrahtungsmuster (ML1N) mit dem ersten Verbindungsverdrahtungsmuster zu verbinden, und eines zweiten Brückenverdrahtungsmusters (ML1B), das konfiguriert ist, das zweite angrenzende Verdrahtungsmuster (ML2N) mit dem zweiten Verbindungsverdrahtungsmuster zu verbinden, auf korrespondierenden vertikalen Ebenen hinzugefügt werden, und Speichern der geänderten Entwurfsregel in dem Entwurfsregelhandbuch umfasst und
wobei das Herstellen der Halbleitervorrichtung das Herstellen der Halbleitervorrichtung derart, dass mindestens eines des ersten Brückenverdrahtungsmusters (ML1B) und des zweiten Brückenverdrahtungsmusters (ML2B) in der Halbleitervorrichtung enthalten ist, umfasst.

## Revendications

1. Procédé de fabrication d'un dispositif semiconducteur, comprenant :
la conception (S110) d'une topologie de dispositif semiconducteur en utilisant un manuel de règles de conception dans lequel les règles d'une pluralité de règles de conception sont enregistrées, la topologie de dispositif semiconducteur comprenant :
une électrode de grille (150) ;
une couche diélectrique d'électrode de grille (140) agencée entre une région active (FA) du dispositif semiconducteur et l'électrode de grille (150) ; et
une pluralité de motifs de câblage incluant :
un motif de câblage de grille (ML1G) connecté électriquement à l'électrode de grille (150) ;
un premier motif de câblage adjacent (ML1N) qui est adjacent au motif de câblage de grille (ML1G) ; et
un motif de câblage cible (ML4L) connecté électriquement au premier motif de câblage adjacent (ML1N) ;
la réalisation (S160) d'une évaluation de défaillance pour le dispositif semiconducteur afin d'identifier si une défaillance est ou non survenue pour le dispositif semiconducteur fourni conformément à la topologie de dispositif semiconducteur, la défaillance incluant au moins une défaillance de structure de grille du dispositif semiconducteur fabriqué en utilisant la topologie de dispositif semiconducteur conçue ;
la mise à jour (S170) du manuel de règles de conception en mettant à jour la pluralité de règles de conception enregistrées dans le manuel de règles de conception, sur la base d'un résultat de l'évaluation de défaillance, dans lequel la mise à jour (S170) du manuel de règles de conception comprend, lorsqu'une aire du motif de câblage cible (ML4L) est plus grande qu'une aire maximum de seuil, au moins l'une des modifications suivantes :
la modification d'une règle de conception parmi la pluralité de règles de conception de telle sorte qu'un intervalle de séparation entre le motif de câblage de grille (ML1G) et le premier motif de câblage adjacent (ML1N) soit passé d'un premier intervalle de séparation à un second intervalle de séparation qui est plus grand que le premier intervalle de séparation ; et/ou
la modification d'une règle de conception parmi la pluralité de règles de conception de telle sorte qu'un motif de câblage de pont (ML1B ; ML2B ; ML3B) connecté entre des motifs de câblage à un niveau vertical plus bas au motif de câblage cible (ML4L) soit ajouté afin de connecter électriquement le motif de câblage cible (ML4L) à un substrat (110) du dispositif semiconducteur ;
la conception à nouveau (S110a) de la topologie de dispositif semiconducteur en utilisant le manuel de règles de conception mis à jour ;
la fabrication (S130a) du dispositif semiconducteur en utilisant la topologie de dispositif semiconducteur conçue à nouveau ; et
le stockage de la règle de conception modifiée dans le manuel de règles de conception.

2. Procédé selon la revendication 1, dans lequel la fabrication (S130a) du dispositif semiconducteur comprend la fabrication (S130a) du dispositif semiconducteur de sorte qu'il comprenne :
une paire de premières régions d'impuretés (132) et une seconde région d'impuretés (134) agencées de manière à être mutuellement espacées sur une partie d'un côté supérieur du substrat (110) ; et
une structure de câblage (MLS) qui inclut la pluralité de motifs de câblage et une pluralité de vias de câblage,
dans lequel l'électrode de grille (150) est agencée sur la région active (FA) entre les régions de la paire de premières régions d'impuretés (132),
dans lequel la couche diélectrique de grille (140) est agencée entre la région active (FA) et l'électrode de grille (150), et
dans lequel la défaillance de structure de grille comprend une rupture de la couche diélectrique de grille (140), une érosion de la région active (FA) ou une érosion de l'électrode de grille (150).

3. Procédé selon la revendication 2, dans lequel la pluralité de motifs de câblage comprend :
une pluralité de premiers motifs de câblage (ML1) agencés à un premier niveau vertical, une pluralité de deuxièmes motifs de câblage (ML2) agencés à un deuxième niveau vertical qui est plus haut que le premier niveau vertical, une pluralité de troisièmes motifs de câblage (ML3) agencés à un troisième niveau vertical qui est plus haut que le deuxième niveau vertical et une pluralité de quatrièmes motifs de câblage (ML4) agencés à un quatrième niveau vertical qui est plus haut que le troisième niveau vertical,
dans lequel la pluralité de premiers motifs de câblage (MV1) comprend le motif de câblage de grille (ML1G) connecté électriquement à l'électrode de grille (150), le premier motif de câblage adjacent qui est adjacent au motif de câblage de grille (ML1G) et un premier motif de câblage de connexion agencé entre la pluralité de quatrièmes motifs de câblage (MV4) et la seconde région d'impuretés (134) et configuré pour connecter électriquement la pluralité de quatrièmes motifs de câblage (ML4) à la seconde région d'impuretés (134),
dans lequel la pluralité de deuxièmes motifs de câblage (ML2) comprend un second motif de câblage adjacent (ML2N) agencé entre le premier motif de câblage adjacent (ML1N) et la pluralité de quatrièmes motifs de câblage (ML4) et configuré pour connecter électriquement la pluralité de quatrièmes motifs de câblage (ML4) au premier motif de câblage adjacent (ML1N), et un deuxième motif de câblage de connexion agencé entre la pluralité de quatrièmes motifs de câblage (MV4) et la seconde région d'impuretés (134) et configuré pour connecter électriquement la pluralité de quatrièmes motifs de câblage (MV4) à la seconde région d'impuretés (134), et
dans lequel la pluralité de troisièmes motifs de câblage (ML3) comprend le motif de câblage cible (ML4L) agencé entre le premier motif de câblage adjacent (ML1N) et la pluralité de quatrièmes motifs de câblage (ML4) et configuré pour connecter électriquement la pluralité de quatrièmes motifs de câblage (ML4) au premier motif de câblage adjacent (ML1N), et un troisième motif de câblage de connexion agencé entre la pluralité de quatrièmes motifs de câblage (MV4) et la seconde région d'impuretés (134) et configuré pour connecter électriquement la pluralité de quatrièmes motifs de câblage (MV4) à la seconde région d'impuretés (134).

4. Procédé selon la revendication 3, dans lequel la mise à jour (S170) du manuel de règles de conception comprend :
lorsque l'aire du motif de câblage cible (ML4L) est plus grande que l'aire maximum de seuil, la modification d'une règle de conception parmi la pluralité de règles de conception de telle sorte qu'au moins un motif de câblage de pont parmi un premier motif de câblage de pont (ML1B) configuré pour connecter le premier motif de câblage adjacent (ML1N) au premier motif de câblage de connexion et un second motif de câblage de pont (ML2B) configuré pour connecter le second motif de câblage adjacent (ML2N) au deuxième motif de câblage de connexion soit ajouté ; et
le stockage de la règle de conception modifiée dans le manuel de règles de conception.

5. Procédé selon la revendication 4, dans lequel l'aire du motif de câblage cible est approximativement égale à une aire totale des troisièmes motifs de câblage (ML3) mutuellement connectés à un niveau vertical identique parmi la pluralité de troisièmes motifs de câblage (ML3).

6. Procédé selon l'une quelconque des revendications 3 à 5, comprenant en outre :
la fabrication (S130a) du dispositif semiconducteur en réalisant une simulation en utilisant la topologie de dispositif semiconducteur conçue ; et
la réalisation d'une évaluation de défaillance, la défaillance pouvant inclure une rupture de la couche diélectrique de grille (140), une érosion de la région active (FA) ou une érosion de l'électrode de grille (150), lesquelles sont incluses dans le dispositif semiconducteur fabriqué en utilisant la simulation.

7. Procédé selon la revendication 6, dans lequel le premier intervalle de séparation est un intervalle entre le motif de câblage de grille (ML1G) inclus dans le dispositif semiconducteur fabriqué en utilisant la simulation et le premier motif de câblage adjacent (ML1N).

8. Procédé selon l'une quelconque des revendications précédentes, dans lequel le procédé comprend :
la fabrication (S130) du dispositif semiconducteur en réalisant un traitement de tranche en utilisant la topologie de dispositif semiconducteur conçue à nouveau ;
la réalisation (S140) d'un test d'inspection de caractéristiques électriques du dispositif semiconducteur fabriqué ; et
la réalisation (S160) de l'évaluation de défaillance du dispositif semiconducteur fabriqué pour identifier si une défaillance est ou non survenue en utilisant un résultat du test.

9. Procédé selon l'une quelconque des revendications 1 à 7, comprenant :
la fabrication (S130) du dispositif semiconducteur en réalisant un traitement de tranche en utilisant la topologie de dispositif semiconducteur conçue ;
la réalisation (S140) d'un test d'inspection de caractéristiques électriques du dispositif semiconducteur fabriqué ; et
la réalisation (S160) d'une évaluation de défaillance, la défaillance pouvant inclure une rupture de la couche diélectrique de grille, une érosion d'une région active ou une érosion de l'électrode de grille, lesquelles sont incluses dans le dispositif semiconducteur, sur la base d'un résultat du test du dispositif semiconducteur fabriqué.

10. Procédé selon l'une quelconque des revendications précédentes, dans lequel la réalisation de l'évaluation de défaillance comprend :
la réalisation (S150) d'une simulation de fabrication du dispositif semiconducteur en utilisant la topologie de dispositif semiconducteur conçue à nouveau ; et
la réalisation (S160) de l'évaluation de défaillance du dispositif semiconducteur fabriqué en utilisant la simulation.

11. Procédé selon la revendication 10, dans lequel la fabrication du dispositif semiconducteur comprend la fabrication du dispositif semiconducteur de sorte qu'il comprenne :
le substrat (110) qui inclut la région active (FA) définie par une couche d'isolation de dispositif (120) ;
une paire de premières régions d'impuretés (132) et une seconde région d'impuretés (134) agencées de manière à être mutuellement espacées sur une partie d'un côté supérieur du substrat (110) ;
l'électrode de grille (150) agencée sur la région active (FA) entre les régions de la paire de premières régions d'impuretés (132) ;
la couche diélectrique de grille (140) agencée entre la région active (FA) et l'électrode de grille (150) ; et
une structure de câblage (MLS) incluant la pluralité de motifs de câblage et une pluralité de vias de câblage,
dans lequel la pluralité de motifs de câblage comprend :
une pluralité de premiers motifs de câblage (ML1) agencés au-dessus de l'électrode de grille (150), incluant un motif de câblage de grille connecté électriquement à l'électrode de grille (150), un premier motif de câblage adjacent (ML1N) qui est adjacent au motif de câblage de grille (ML1G) et une pluralité de premiers motifs de câblage de connexion, au-dessus de la seconde région d'impuretés (134), dans lequel une première région d'impuretés de la paire de premières régions d'impuretés (132) est connectée électriquement à la seconde région d'impuretés (134) ;
une pluralité de deuxièmes motifs de câblage (ML2) agencés sur un niveau vertical plus haut que la pluralité de premiers motifs de câblage (ML1) et incluant un second motif de câblage adjacent (ML2N) connecté électriquement au premier motif de câblage adjacent (ML1N) au-dessus du premier motif de câblage adjacent (ML1N) et un deuxième motif de câblage de connexion au-dessus du premier motif de câblage de connexion, connecté électriquement au premier motif de câblage de connexion ;
une pluralité de troisièmes motifs de câblage (ML3) agencés sur un niveau vertical plus haut que la pluralité de deuxièmes motifs de câblage (ML2) et incluant le motif de câblage cible (ML4L) au-dessus du second motif de câblage adjacent (ML2N), connecté électriquement au second motif de câblage adjacent (ML2N), et un troisième motif de câblage de connexion au-dessus du deuxième motif de câblage de connexion, connecté électriquement au deuxième motif de câblage de connexion ; et
une pluralité de quatrièmes motifs de câblage (ML4) agencés sur un niveau vertical plus haut que la pluralité de troisièmes motifs de câblage (ML3) et connectés électriquement au motif de câblage cible (ML4L) et au troisième motif de câblage de connexion au-dessus du motif de câblage cible (ML4L) et du troisième motif de câblage de connexion.

12. Procédé selon la revendication 11, dans lequel :
la conception de la topologie de dispositif semiconducteur comprend la conception de la topologie de dispositif semiconducteur de telle sorte que l'intervalle de séparation entre le motif de câblage de grille et le premier motif de câblage adjacent soit défini selon le premier intervalle de séparation, dans lequel
la mise à jour du manuel de règles de conception comprend, lorsque l'aire du motif de câblage cible est plus grande qu'une aire maximum de seuil, la modification de la règle de conception parmi la pluralité de règles de conception de telle sorte que l'intervalle de séparation entre le motif de câblage de grille et le premier motif de câblage adjacent soit défini selon le second intervalle de séparation qui est plus grand que le premier intervalle de séparation, et le stockage de la règle de conception modifiée dans le manuel de règles de conception, et dans lequel
la fabrication du dispositif semiconducteur comprend la fabrication du dispositif semiconducteur en définissant l'intervalle de séparation entre le motif de câblage de grille et le premier motif de câblage adjacent selon le second intervalle de séparation.

13. Procédé selon la revendication 12, dans lequel :
la conception de la topologie de dispositif semiconducteur comprend la conception de la topologie de dispositif semiconducteur de telle sorte que le premier motif de câblage adjacent (ML1N) et le premier motif de câblage de connexion soient agencés de manière à être mutuellement espacés à un niveau vertical identique, que le second motif de câblage adjacent (ML2N) et le deuxième motif de câblage de connexion soient agencés de manière à être mutuellement espacés à un niveau vertical identique et que le motif de câblage cible (ML4L) et le troisième motif de câblage de connexion soient agencés de manière à être mutuellement espacés à un niveau vertical identique, dans lequel
la mise à jour du manuel de règles de conception comprend, lorsque l'aire du motif de câblage cible (ML4L) est plus grande que l'aire maximum de seuil, la mise à jour de la règle de conception de telle sorte qu'au moins un motif de câblage de pont parmi un premier motif de câblage de pont (ML1B) configuré pour connecter le premier motif de câblage adjacent (ML1N) au premier motif de câblage de connexion et un second motif de câblage de pont (ML1B) configuré pour connecter le second motif de câblage adjacent (ML2N) au deuxième motif de câblage de connexion soit ajouté à des niveaux verticaux correspondants, et le stockage de la règle de conception modifiée dans le manuel de règles de conception, et dans lequel
la fabrication du dispositif semiconducteur comprend la fabrication du dispositif semiconducteur de telle sorte qu'au moins un motif de câblage de pont parmi le premier motif de câblage de pont (ML1B) et le second motif de câblage de pont (ML2B) soit inclus dans le dispositif semiconducteur.
